# EUROPEAN PATENT APPLICATION

(11) **EP 4 848 801 A1**
(43) Date of publication of application: **02.12.2026**
(21) Application number: 24936098.3
(22) Date of filing: 30.12.2024
(51) Int. Cl.: H04W 28/04, H04W 28/02, H04W 76/14, H04W 76/11, H04W 4/80, H04W 88/02, H04B 1/3827

(54) **ELECTRONIC DEVICE, METHOD, AND NON-TRANSITORY COMPUTER-READABLE RECORDING MEDIUM FOR MAINTAINING COMMUNICATION CONNECTION**

(30) Priority: 19.04.2024 KR 20240053019; 25.04.2024 KR 20240055605; 07.05.2024 KR 20240060175
(71) Applicant: SAMSUNG ELECTRONICS CO., LTD., Yeongtong-gu Suwon-si, Gyeonggi-do 16677 (KR)
(72) Inventor: BAE, Yunsik, Suwon-si, Gyeonggi-do 16677 (KR); LEE, Youngkow, Suwon-si, Gyeonggi-do 16677 (KR); CHEONG, Gupil, Suwon-si, Gyeonggi-do 16677 (KR); KIM, Ihlho, Suwon-si, Gyeonggi-do 16677 (KR); RYU, Chunwoo, Suwon-si, Gyeonggi-do 16677 (KR); YOO, Hyungseoung, Suwon-si, Gyeonggi-do 16677 (KR); LIM, Junhak, Suwon-si, Gyeonggi-do 16677 (KR)
(74) Representative: Gulde & Partner
(86) International application number: PCT/KR2024/021510
(87) International publication number: WO 2025/220835

(57) **Abstract**

Disclosed is an electronic device. The electronic device may receive a first packet within a first connection event from an external electronic device operating as a central device with respect to the electronic device. In response to the first packet, the electronic device may transmit, to the external electronic device within the first connection event, a second packet including an NESN field having a second value different from a first value of an SN field of the first packet. On the basis that an SN field of a third packet transmitted from the external electronic device corresponds to the second value within a second connection event according to a peripheral latency after receiving the first packet, the electronic device may receive a fourth packet transmitted from the external electronic device within a third connection event according to the peripheral latency. On the basis that the SN field of the third packet corresponds to the first value, the electronic device may receive a packet transmitted from the external electronic device before the third connection event according to the peripheral latency.

## Description

### [Technical Field]

The disclosure relates to an electronic device, a method, and a non-transitory computer readable storage medium for maintaining a communication connection.

### [Background Art]

Bluetooth (or legacy Bluetooth) (or classic Bluetooth) may refer to a short-range wireless technology standard used to exchange data between electronic devices. For example, the Bluetooth may be used to exchange text information, voice information, and/or audio information through wireless communication between the electronic devices.

Bluetooth low energy (BLE) may provide reduced power consumption and provide a wide communication range between devices, compared to the legacy Bluetooth. The BLE may be provided on an industrial, scientific, and medical (ISM) radio band.

### [Disclosure]

### [Technical Solution]

According to an example embodiment, an electronic device is provided. The electronic device may comprise: communication circuitry for Bluetooth low energy (BLE), at least one processor, comprising processing circuitry, and memory comprising one or more storage mediums, and storing instructions. The instructions that, when executed by the at least one processor individually or collectively, may cause the electronic device to receive, through the communication circuitry, a first packet in a first connection event from an external electronic device operating as a central device with respect to the electronic device operating as a peripheral device. The first packet may include a sequence number (SN) field having a first value. The instructions that, when executed by the at least one processor individually or collectively, may cause the electronic device to, in response to the first packet, transmit, in the first connection event to the external electronic device, a second packet including a next expected sequence number (NESN) field having a second value different from the first value of the sequence number (SN) field of the first packet. The instructions that, when executed by the at least one processor individually or collectively, may cause the electronic device to, in a second connection event according to peripheral latency after receiving the first packet, receive a third packet transmitted from the external electronic device. The instructions that, when executed by the at least one processor individually or collectively, may cause the electronic device to identify a value included in the SN field of the third packet. The instructions that, when executed by the at least one processor individually or collectively, may cause the electronic device to, based on the SN field of the third packet corresponding to the second value, receive a fourth packet transmitted from the external electronic device in a third connection event according to the peripheral latency. The instructions that, when executed by the at least one processor individually or collectively, may cause the electronic device to, based on the SN field of the third packet corresponding to the first value, receive a packet transmitted from the external electronic device, before the third connection event according to the peripheral latency.

According to an example embodiment, a method is disclosed. The method may comprise: receiving, through communication circuitry, a first packet in a first connection event from an external electronic device operating as a central device with respect to the electronic device operating as a peripheral device. The first packet may include a sequence number (SN) field having a first value. The method may comprise, in response to the first packet, transmitting, in the first connection event to the external electronic device, a second packet including a next expected sequence number (NESN) field having a second value different from the first value of the sequence number (SN) field of the first packet. The method may comprise, in a second connection event according to peripheral latency after receiving the first packet, receiving a third packet transmitted from the external electronic device. The method may comprise identifying a value included in the SN field of the third packet. The method may comprise, based on the SN field of the third packet corresponding to the second value, receiving a fourth packet transmitted from the external electronic device in a third connection event according to the peripheral latency. The method may comprise, based on the SN field of the third packet corresponding to the first value, receiving a packet transmitted from the external electronic device, before the third connection event according to the peripheral latency.

According to an example embodiment, a non-transitory computer-readable storage medium is disclosed. The non-transitory computer readable storage medium may store one or more programs including instructions. The instructions that, when executed by at least one processor, comprising processing circuitry, of an electronic device including communication circuitry for Bluetooth low energy (BLE), individually or collectively, may cause the electronic device to: receive, through the communication circuitry, a first packet in a first connection event from an external electronic device operating as a central device with respect to the electronic device operating as a peripheral device. The first packet may include a sequence number (SN) field having a first value. The instructions that, when executed by the at least one processor individually or collectively, may cause the electronic device to, in response to the first packet, transmit, in the first connection event to the external electronic device, a second packet including a next expected sequence number (NESN) field having a second value different from the first value of the sequence number (SN) field of the first packet. The instructions that, when executed by the at least one processor individually or collectively, may cause the electronic device to, in a second connection event according to peripheral latency after receiving the first packet, receive a third packet transmitted from the external electronic device. The instructions that, when executed by the at least one processor individually or collectively, may cause the electronic device to identify a value included in the SN field of the third packet. The instructions that, when executed by the at least one processor individually or collectively, may cause the electronic device to, based on the SN field of the third packet corresponding to the second value, receive a fourth packet transmitted from the external electronic device in a third connection event according to the peripheral latency. The instructions that, when executed by the at least one processor individually or collectively, may cause the electronic device to, based on the SN field of the third packet corresponding to the first value, receive a packet transmitted from the external electronic device, before the third connection event according to the peripheral latency.

### [Description of the Drawings]

The above and other aspects, features and advantages of certain embodiments of the present disclosure will be more apparent from the following detailed description, taken in conjunction with the accompanying drawings, in which:
FIG. 1 is a block diagram illustrating an example configuration of a wireless environment including an electronic device and an external electronic device according to various embodiments;
FIG. 2A is a signal flow diagram illustrating example operations for establishing a communication connection between an electronic device and an external electronic device according to various embodiments;
FIG. 2B is a signal flow diagram illustrating example operations for establishing a communication connection between an electronic device and an external electronic device according to various embodiments;
FIG. 3 is a diagram illustrating example screens displayed during a communication connection in an external electronic device according to various embodiments;
FIG. 4 is a diagram illustrating an example of parameters used for a communication connection between an electronic device and an external electronic device according to various embodiments;
FIG. 5 is a diagram illustrating an example of exchanging a packet for updating a parameter between an electronic device and an external electronic device, according to various embodiments;
FIG. 6 is a diagram illustrating an example of an updated parameter according to various embodiments;
FIG. 7 is a flowchart illustrating an example method in which an electronic device processes an event based on a packet from an external electronic device, according to various embodiments;
FIG. 8A is a diagram illustrating an example operation in which an electronic device identifies an event based on a packet from an external electronic device, according to various embodiments;
FIG. 8B is a diagram illustrating an example operation in which an electronic device additionally receives a packet from an external electronic device, according to various embodiments;
FIG. 8C is a diagram illustrating an example operation in which an electronic device additionally receives a packet from an external electronic device, according to various embodiments;
FIG. 8D is a diagram illustrating an example operation in which an electronic device identifies an event based on a packet from an external electronic device, according to various embodiments;
FIG. 9 is a flowchart illustrating an example method in which an electronic device processes an event based on a packet from an external electronic device, according to various embodiments;
FIG. 10 is a diagram illustrating an example operation in which an electronic device obtains additional data based on a packet from an external electronic device, according to various embodiments;
FIG. 11 is a diagram illustrating an example operation in which an electronic device changes frequency for obtaining additional data based on a packet from an external electronic device, according to various embodiments;
FIG. 12 is a diagram illustrating an example wearable device according to various embodiments;
FIG. 13 is a cross-sectional view of an example wearable device according to various embodiments; and
FIG. 14 is a block diagram illustrating an example electronic device in a network environment according to various embodiments.

### [Mode for Invention]

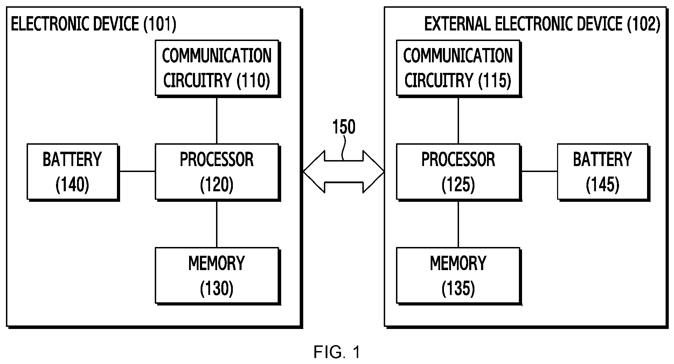

FIG. 1 is a block diagram illustrating an example configuration of a wireless environment including an electronic device and an external electronic device according to various embodiments.

In an embodiment, an electronic device 101 in the wireless environment may be referred to as a server device, a peripheral device, a secondary device, or a sub device. In an embodiment, an external electronic device 102 in the wireless environment may include a device such as a smartphone, a laptop computer, a desktop computer, or a tablet PC. In an embodiment, the external electronic device 102 may be referred to as a client device, a central device, a primary device, or a main device.

Referring to FIG. 1, the electronic device 101 may include communication circuitry 110, a processor (e.g., including processing circuitry) 120, memory 130, and a battery 140.

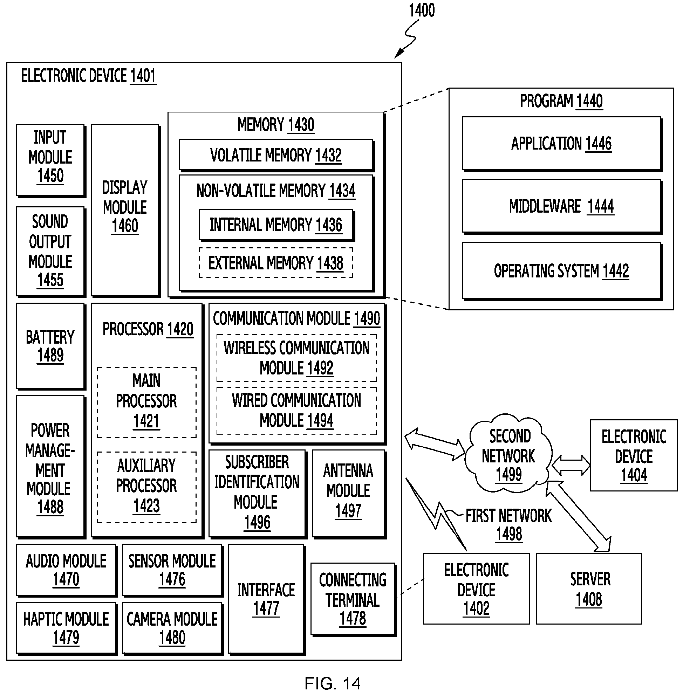

In an embodiment, the communication circuitry 110 may be used to support Bluetooth communication (e.g., legacy Bluetooth communication (or classic Bluetooth communication and/or Bluetooth low energy (BLE)) between the electronic device 101 and another electronic device (e.g., the external electronic device 102). For example, the communication circuitry 110 may include at least a portion of a communication module 1490 (or a wireless communication module 1492) of FIG. 14, or may correspond to at least a portion of the communication module 1490 (or the wireless communication module 1492) of FIG. 14. For example, the communication circuitry 110 may include communication circuitry for Bluetooth. For example, the communication circuitry 110 may be used to establish a communication link 150. For example, the communication circuitry 110 may be used to transmit a packet to the external electronic device 102 through the communication link 150. For example, the communication circuitry 110 may be used to receive a packet from the external electronic device 102 through the communication link 150. For example, the communication circuitry 110 may be used to further support another communication technique (e.g., wireless fidelity (Wi-Fi)) distinct from a Bluetooth communication technique. For example, the communication circuitry 110 may be implemented as a single chip or may be implemented as a plurality of chips. For example, the communication circuitry 110 may be implemented as one integrated circuit or may be implemented as a plurality of integrated circuits. For example, the communication circuitry 110 may be dispersedly arranged in the electronic device 101.

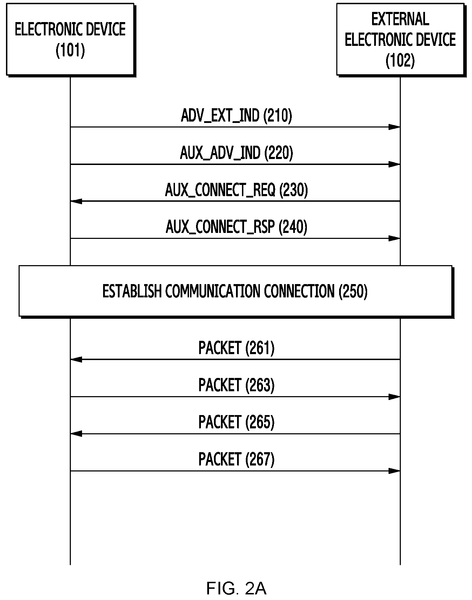

In an embodiment, the processor 120 may include various processing circuitry and be used to execute operations of the electronic device 101 illustrated in a description of FIG. 2A, FIG. 2B, FIG. 7, and/or FIG. 9. For example, the processor 120 may include at least a portion of a processor 1420 of FIG. 14 or may correspond to at least a portion of the processor 1420 of FIG. 14. For example, the processor 120 may include one or more processors including an application processor (AP) and/or a communication processor (CP). For example, the processor 120 may be implemented as a single chip such as a system on chip (SoC) or may be implemented with a plurality of chips. For example, the processor 120 may be implemented as one integrated circuit or may be implemented as a plurality of integrated circuits. For example, the processor 120 may be dispersedly arranged in the electronic device 101. The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment, the memory 130 may (at least temporarily) store instructions for executing the operations of the electronic device 101 illustrated in the description of FIG. 2A, FIG. 2B, FIG. 7, and/or FIG. 9. The instructions may be executed by the processor 120. The instructions may be included in one or more programs stored in the memory 130. For example, the memory 130 may include at least a portion of memory 1430 (or at least a portion of non-volatile memory 1434) of FIG. 14, or correspond to at least a portion of the memory 1430 (or at least a portion of the non-volatile memory 1434) of FIG. 14. For example, the memory 130 may include main memory (e.g., random access memory (RAM)) in the electronic device 101, a register for the processor 120, a cache for the processor 120, a register for the communication circuitry 110, a buffer (or a soft buffer) for the communication circuitry 110, and/or an auxiliary memory (e.g., a hard disk drive (HDD) or a solid state drive (SSD)) of the electronic device 101. For example, the memory 130 may be implemented as a single chip or may be implemented as a plurality of chips. For example, the memory 130 may be implemented as one integrated circuit or may be implemented as a plurality of integrated circuits. For example, the memory 130 may be dispersedly arranged in the electronic device 101.

In an embodiment, the battery 140 may be a rechargeable secondary battery. In an embodiment, the battery 140 may be integrally disposed inside the electronic device 101.

In an embodiment, the external electronic device 102 may include communication circuitry 110, a processor (e.g., including processing circuitry) 120, amemory 130, and a display 145.

For example, the communication circuitry 110 may include at least a portion of the communication module 1490 (or the wireless communication module 1492) of FIG. 14, or may correspond to at least a portion of the communication module 1490 (or the wireless communication module 1492) of FIG. 14. For example, the processor 120 may include at least a portion of the processor 1420 of FIG. 14 or may correspond to at least a portion of the processor 1420 of FIG. 14. For example, the memory 130 may include at least a portion of the memory 1430 (or at least a portion of the non-volatile memory 1434) of FIG. 14 or correspond to at least a portion of the memory 1430 (or at least a portion of the non-volatile memory 1434) of FIG. 14. For example, the display 145 may include at least a portion of a display module 1460 of FIG. 14 or may correspond to at least a portion of the display module 1460 of FIG. 14.

In an embodiment, a size of the electronic device 101 may be relatively smaller than a size of the external electronic device 102. For example, a space that may be allocated for the battery 140 in the electronic device 101 may be relatively small. For example, due to such a space limitation, the battery 140 included in the electronic device 101 may have a relatively small capacity. For example, since the battery 140 of the electronic device 101 has the relatively small capacity, a method for reducing power consumption in the electronic device 101 may be required.

Accordingly, the electronic device 101 may periodically change a state of the communication circuitry 110 between a deactivation state and an activation state to receive only a portion of packets from the external electronic device 102.

However, as the external electronic device 102 does not receive a packet of the electronic device 101 while the communication circuitry 110 of the electronic device 101 is activated, a connection between the electronic device 101 and the external electronic device 102 may be released. Therefore, while reducing the power consumed in the electronic device 101, a method may be required to prevent or block a communication connection between the electronic device 101 and the external electronic device 102 from being released.

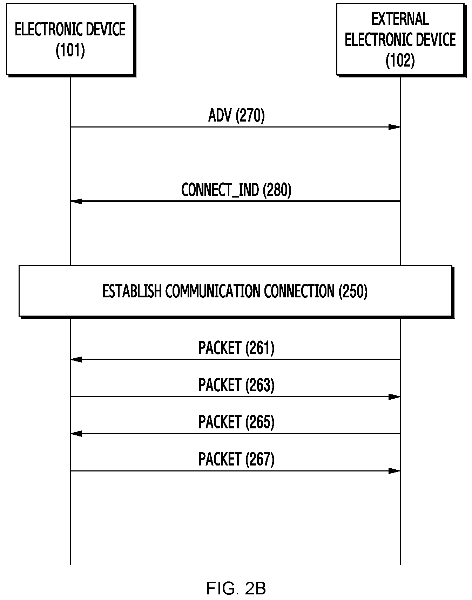

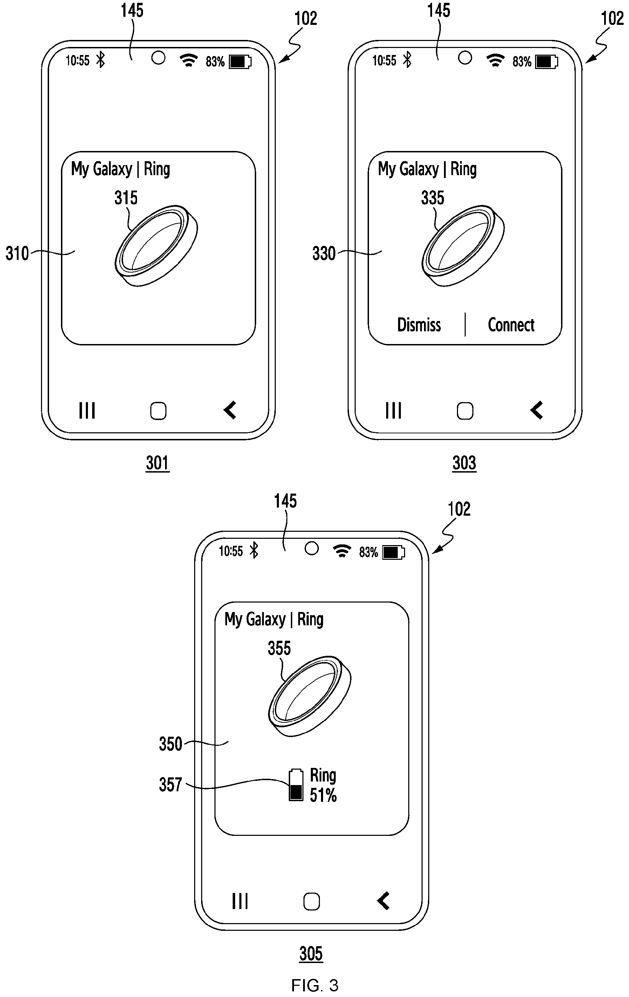

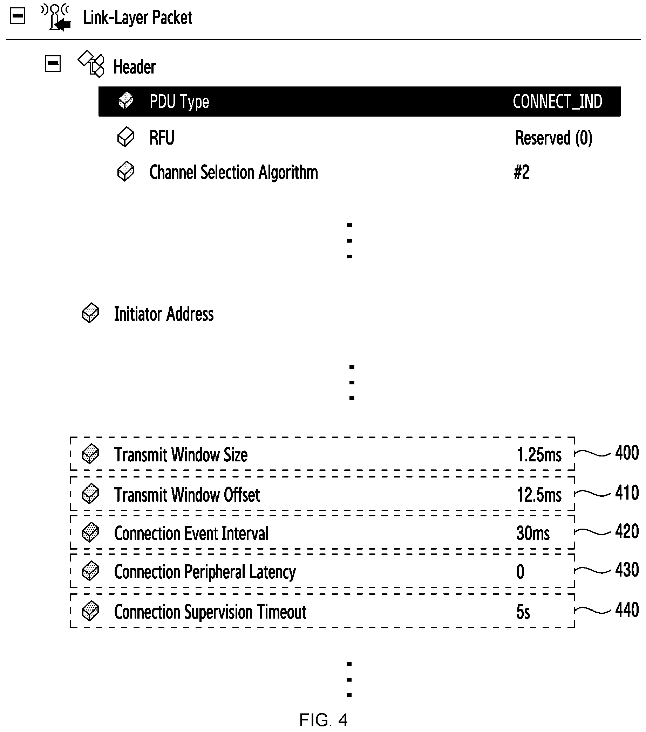

FIG. 2A is a is a signal flow diagram illustrating example operations for establishing a communication connection between an electronic device and an external electronic device according to various embodiments. FIG. 2B is a signal flow diagram illustrating example operations for establishing a communication connection between an electronic device and an external electronic device according to various embodiments. FIG. 3 is a diagram illustrating example screens displayed during a communication connection in an external electronic device according to various embodiments. FIG. 4 is a diagram illustrating an example of a parameter used for a communication connection between an electronic device and an external electronic device according to various embodiments.

For a description of FIGS. 2A, 2B, 3 and 4 (which may be referred to as FIGS. 2A to 4), the electronic device 101 and the external electronic device 102 described in FIG. 1 may be referred to.

Referring to FIG. 2A, in an operation 210, the electronic device 101 may transmit an advertisement packet (or an extended advertisement packet (e.g., ADV_EXT_IND)) to the external electronic device 102 through communication circuitry 110. For example, the electronic device 101 may transmit the extended advertisement packet to the external electronic device 102 through a primary advertisement channel. For example, the extended advertisement packet may include a channel and offset information of a packet to be transmitted in an operation 220. However, the disclosure is not limited thereto.

In the operation 220, the electronic device 101 may transmit an advertisement packet (or an auxiliary advertisement packet (e.g., AUX_ADV_IND)) to the external electronic device 102 through the communication circuitry 110. For example, the electronic device 101 may transmit the auxiliary advertisement packet to the external electronic device 102 through a secondary advertisement channel.

In an embodiment, the electronic device 101 may transmit the advertisement packet (e.g., the extended advertisement packet and/or the auxiliary advertisement packet) in a multicast manner or a broadcast manner. The advertisement packet may be a packet for transmitting information related to a connection or an account (e.g., a pairing) to peripheral electronic devices, using wireless communication (e.g., Bluetooth low energy (BLE or LE) communication). According to an embodiment, the electronic device 101 may transmit the advertisement packet based on a specific event (or a specified condition). For example, the electronic device 101 may transmit the advertisement packet based on recognizing that a state of a door of a device (e.g., a cradle) is changed from a closed state to an open state while the device (e.g., the cradle) available for charging a battery 140 of the electronic device 101 accommodates the electronic device 101. For example, the electronic device 101 may transmit the advertisement packet based on a state in which power is obtained from the device while the device available for charging the battery 140 of the electronic device 101 mounts the electronic device 101. However, the disclosure is not limited thereto. For example, in case that the power for charging the battery 140 is supplied from the outside, the electronic device 101 may transmit the advertisement packet based on at least one of a specified time period, or an input of a user. For example, the electronic device 101 may transmit the advertisement packet, in case that there is no (or in case of being released) communication link with the external electronic device 102 and/or based on recognizing that the electronic device 101 is changed from a state worn by the user to a state unworn. However, the disclosure is not limited thereto. For example, the electronic device 101 may transmit an advertisement packet in a state in which the electronic device 101 is worn by the user.

In an embodiment, the advertisement packet (e.g., the extended advertisement packet and/or the auxiliary advertisement packet) may include at least one of identification information of the electronic device 101 (hereinafter, device identification information), account information of a user (hereinafter, user account information), information on whether being currently paired with another device (hereinafter, current pairing information), a list of a previously paired device (hereinafter, pairing list), information on a device that may be paired simultaneously (hereinafter, simultaneous pairing information), transmission power, a detection area, and/or information on remaining power of the battery 140 (hereinafter, battery state information).

In an embodiment, the external electronic device 102 may display information on the electronic device 101 through a display 145 in response to receiving the advertisement packet (e.g., the extended advertisement packet and/or the auxiliary advertisement packet). For example, referring to a state 301 of FIG. 3, the external electronic device 102 may display a user interface (UI) 310 (e.g., a pop-up screen) including a type (e.g., a Galaxy Ring) (or the device identification information) of the electronic device 101 and/or a visual object (e.g., a ring image) 315 indicating the electronic device 101. For example, referring to a state 303 of FIG. 3, the external electronic device 102 may display a UI 330 including the type of electronic device 101, a visual object 335 indicating the electronic device 101, and/or an object (e.g., Dismiss, Connect) that inquires whether to connect. For example, referring to a state 305 of FIG. 3, the external electronic device 102 may display a UI 350 including the type of electronic device 101, a visual object 355 indicating the electronic device 101, and/or a visual object 357 indicating a charging state of the external electronic device 102. However, the disclosure is not limited thereto. For example, the external electronic device 102 may indicate whether the electronic device 101 and the external electronic device 102 have ever been paired based on the current pairing information. For example, the external electronic device 102 may indicate whether the electronic device 101 is a device of a user of the external electronic device 102 based on the user account information.

In an operation 230, the external electronic device 102 may transmit a connection request packet (e.g., AUX_CONNECT_REQ) to the electronic device 101 through communication circuitry 115. For example, the external electronic device 102 may transmit the connection request packet to the electronic device 101 through the secondary advertisement channel. For example, the external electronic device 102 may transmit the connection request packet to the electronic device 101 in response to determining to establish the communication connection with the electronic device 101.

In an operation 240, the electronic device 101 may transmit a connection response packet (e.g., AUX_CONNECT_RSP) to the external electronic device 102 through the communication circuitry 110. For example, the electronic device 101 may transmit the connection response packet to the external electronic device 102 through the secondary advertisement channel. For example, the electronic device 101 may transmit the connection response packet to the external electronic device 102 in response to determining to establish the communication connection with the external electronic device 102.

In an operation 250, as the electronic device 101 and the external electronic device 102 exchange the connection request packet and the connection response packet with each other, the communication connection (e.g., the communication link 150 of FIG. 1) may be established between the electronic device 101 and the external electronic device 102.

In an embodiment, the electronic device 101 and the external electronic device 102 connected through the communication link 150 may perform a specified role. For example, the electronic device 101 may perform a role of a peripheral device, and the external electronic device 102 may perform a role of a central device.

Through operations 261, 263, 265, and 267, the electronic device 101 and the external electronic device 102 may transmit and receive a packet. For example, the packet may be a data packet or a control packet. The electronic device 101 and the external electronic device 102 may transmit and receive the packet based on a connection parameter. For example, the connection parameter may be set based on an initiating protocol data unit (PDU). For example, the initiating PDU may be CONNECT_IND or AUX_CONNECT_REQ. For example, referring to FIG. 4, LLData included in the initiating PDU (or CONNECT_IND) may include information on a window size (1 byte) (1.25 ms) 400, window offset (2 bytes) (12.5 ms) 410, a connection event interval (2 bytes) (30 ms) 420, peripheral latency (2 bytes) (0) 430, and a connection timeout (2 bytes) (5 s) 440. A connection event interval (or a connection interval) may indicate a length of time from a start point (or an anchor point) of a connection event. For example, the connection event interval may have a multiple value of 1.25 milliseconds in a range of 7.5 milliseconds to 4 seconds. The window offset may indicate a starting time point at which a packet may be transmitted through a first connection event using a new connection parameter from a time point (or an instant) based on a current previous connection event interval. The window size may be a length of time from the window offset capable of transmitting the packet through the first connection event using the new connection parameter. The peripheral latency may indicate the number of connection events of the external electronic device 102 (or the central device) that the electronic device 101 (or the peripheral device) does not listen to. For example, the electronic device 101 (or the peripheral device) not listening for the connection event may include not receiving the packet transmitted by the external electronic device 102 (or the central device) through the connection event. For example, the electronic device 101 (or the peripheral device) not listening for the connection event may include not opening a receiving window during the connection event (or during the window size in the connection event) in which the external electronic device 102 (or the central device) transmits the packet. For example, the electronic device 101 (or the peripheral device) not listening for the connection event may include deactivating the communication circuitry 110 during the connection event (or during the window size in the connection event) in which the external electronic device 102 (or the central device) transmits the packet. For example, deactivating the communication circuitry 110 may include the electronic device 101 not supplying power to an antenna of the communication circuitry 110. For example, deactivating the communication circuitry 110 may include the electronic device 101 turning off the communication circuitry 110. For example, deactivating the communication circuitry 110 may include the electronic device 101 operating the communication circuitry 110 with low power. However, the disclosure is not limited thereto. In an embodiment, the connection timeout may be time for determining whether to release the communication link 150. For example, in case of not receiving a packet from the electronic device 101 during the connection timeout, the external electronic device 102 may release the communication link 150.

In an embodiment, the electronic device 101 may request an update of the connection parameter. For example, the electronic device 101 may request the update of the connection parameter by transmitting a packet (e.g., LL_CONNECTION_PARAM_REQ) of a specified format to request the update of the connection parameter to the external electronic device 102. For example, the external electronic device 102 may approve or reject an update request in response to the update request for the connection parameter. For example, the external electronic device 102 may approve the update request through a packet (e.g., LL_CONNECTION_UPDATE_IND) of a specified format. For example, the external electronic device 102 may reject the update request through a packet (e.g., LL_REJECT_EXT_IND PDU) of a specified format.

Referring to FIG. 2B, in an operation 270, the electronic device 101 may transmit an advertisement packet (or an advertisement packet (e.g., ADV_IND, ADV_DIRECT_IND)) to the external electronic device 102 through the communication circuitry 110. For example, the electronic device 101 may transmit an extended packet to the external electronic device 102 through the primary advertisement channel. In an embodiment, the advertisement packet may be a packet for transmitting information related to the connection or the account (e.g., the pairing) to the peripheral electronic devices, using the wireless communication (e.g., the Bluetooth low energy (BLE, or LE) communication). According to an embodiment, the electronic device 101 may transmit the advertisement packet based on the specific event (or the specified condition). In an embodiment, the advertisement packet may include at least one of the device identification information, the user account information, the current pairing information, the pairing list, the simultaneous pairing information, the transmission power, the detection area, and/or the battery state information of the electronic device 101.

In an embodiment, the external electronic device 102 may display information on the electronic device 101 through the display 145 in response to receiving the advertisement packet.

In an operation 280, the external electronic device 102 may transmit the initiating PDU (e.g., CONNECT_IND) for initiating a connection to the electronic device 101 through the communication circuitry 115. For example, the external electronic device 102 may transmit the initiating PDU to the electronic device 101 through the primary advertisement channel. For example, the external electronic device 102 may transmit the initiating PDU to the electronic device 101 in response to determining to establish the communication connection with the electronic device 101.

In the operation 250, as the external electronic device 102 transmits a packet for initiating the connection to the electronic device 101, the communication connection (e.g., the communication link 150 of FIG. 1) may be established between the electronic device 101 and the external electronic device 102. In an embodiment, the electronic device 101 and the external electronic device 102 connected through the communication link 150 may perform the specified role. For example, the electronic device 101 may perform the role of the peripheral device, and the external electronic device 102 may perform the role of the central device.

Through the operations 261, 263, 265, and 267, the electronic device 101 and the external electronic device 102 may transmit and receive the packet.

In an embodiment, the electronic device 101 may request the update of the connection parameter through the operations 261, 263, 265, and 267. For example, the electronic device 101 may request the update of the connection parameter by transmitting a packet (e.g., LL_CONNECTION_PARAM_REQ) of the specified format to request the update of the connection parameter to the external electronic device 102. For example, the external electronic device 102 may approve or reject the update request in response to the update request for the connection parameter. For example, the external electronic device 102 may approve the update request through a packet (e.g., LL_CONNECTION_UPDATE_IND) of the specified format. For example, the external electronic device 102 may reject the update request through a packet (e.g., LL_REJECT_EXT_IND PDU) of the specified format.

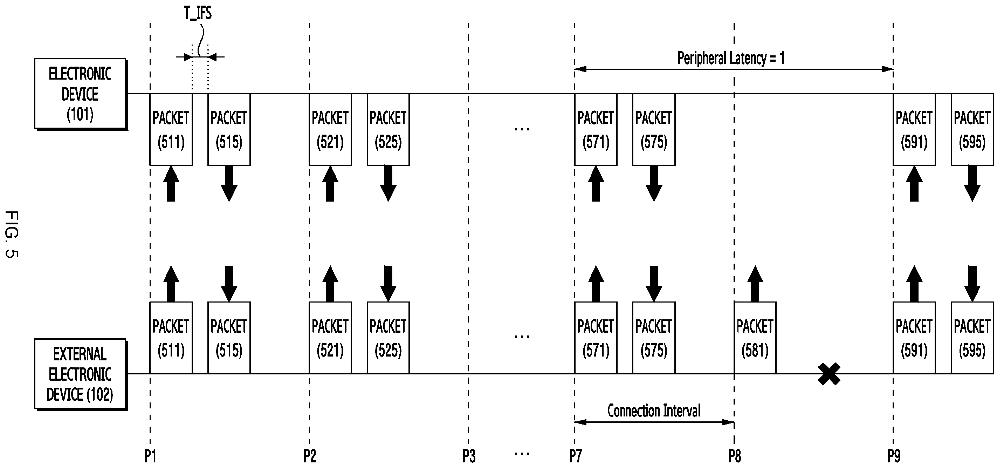

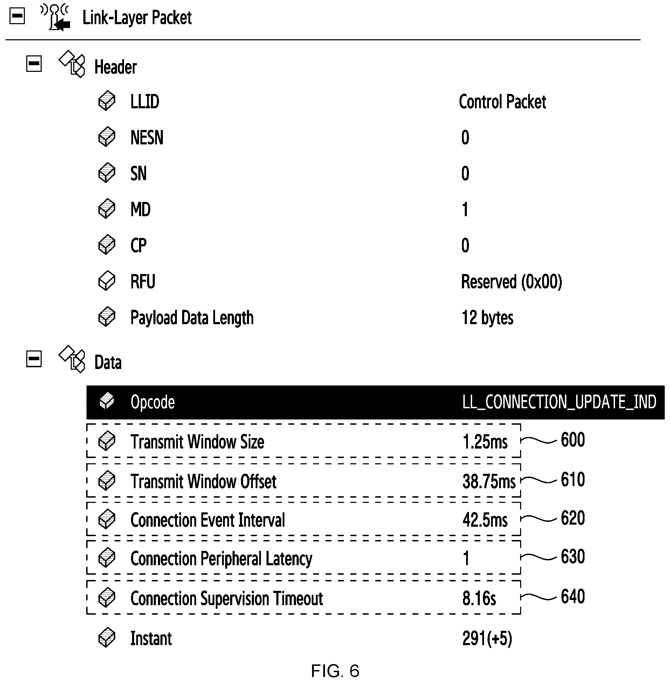

Hereinafter, an operation in which the electronic device 101 and the external electronic device 102 transmit and receive a packet through the updated connection parameter will be described in greater detail with reference to FIG. 5 and FIG. 6.

FIG. 5 is a diagram illustrating an example of exchanging a packet for updating a parameter between an electronic device and an external electronic device according to various embodiments. FIG. 6 is a diagram illustrating an example of an updated parameter according to various embodiments.

For a description of FIG. 5 and FIG. 6, the electronic device 101 and the external electronic device 102 described in FIG. 1 may be referred to. For the description of FIG. 5 and FIG. 6, FIG. 2A to FIG. 4 may be referred to. Situations of FIG. 5 and FIG. 6 may be performed after the operation 250 (or at least after the operation 263) of FIG. 2A or FIG. 2B.

Referring to FIG. 5, the external electronic device 102 may transmit a packet 511 at an anchor point P1. The electronic device 101 may receive the packet 511 at the anchor point P1.

The electronic device 101 may transmit a packet (e.g., LL_CONNECTION_PARAM_REQ) 515 of a specified format to request an update of a connection parameter after a specified time (e.g., a time inter frame space (T_IFS)) (e.g., 150 microseconds) after receiving the packet 511. The external electronic device 102 may receive the packet 515. For example, the packet 515 may be a request to change window offset, a connection event interval, peripheral latency, and a connection timeout of the connection parameter to 38.75 milliseconds, 42.5 milliseconds, 23 and 8.16 seconds, respectively.

The external electronic device 102 may transmit a packet 521 at an anchor point P2. The electronic device 101 may receive the packet 521 at the anchor point P2. For example, the packet 521 may be a packet (e.g., LL_CONNECTION_UPDATE_IND) of a specified format for approving an update request. The electronic device 101 may transmit a packet 525 of a specified format after a specified time (e.g., a time inter frame space (T_IFS)) (e.g., 150 microseconds) after receiving the packet 521.

For example, referring to FIG. 6, the packet (e.g., LL_CONNECTION_UPDATE_IND) of the specified format may indicate that a window size (1.25 milliseconds) 600, window offset (38.75 milliseconds) 610, a connection event interval (42.5 milliseconds) 620, peripheral latency (1) 630, and a connection timeout (8.16 seconds) 640 of the connection parameter are changed. The packet (e.g., LL_CONNECTION_UPDATE_IND) of the specified format may include information (e.g., an instant) indicating an event counter to which an updated connection parameter is applied.

For example, in case that the updated connection parameter initiates after five connection events, the external electronic device 102 may not transmit a packet to the electronic device 101 at anchor points (e.g., P3 to P6).

For example, the external electronic device 102 may transmit a packet 571 at an anchor point P7. The electronic device 101 may receive the packet 571 at the anchor point P7. The electronic device 101 may transmit a packet 575 after the specified time (e.g., T_IFS) after receiving the packet 571. The external electronic device 102 may receive the packet 575.

For example, the external electronic device 102 may transmit a packet 581 at an anchor point P8. The electronic device 101 may not receive the packet 581 at the anchor point P8 according to the peripheral latency. For example, the electronic device 101 may turn off (or deactivate) (or save power) communication circuitry 110 during a connection event in a connection interval corresponding to the anchor point P8. For example, deactivating the communication circuitry 110 may include the electronic device 101 not supplying power to an antenna of the communication circuitry 110. For example, deactivating the communication circuitry 110 may include the electronic device 101 not listening for a packet. For example, deactivating the communication circuitry 110 may include the electronic device 101 not opening a window for receiving the packet (e.g., a reception window).

For example, the external electronic device 102 may transmit a packet 591 at an anchor point P9. The electronic device 101 may receive the packet 591 at the anchor point P9. The electronic device 101 may transmit a packet 595 after the specified time (e.g., T_IFS) after receiving the packet 591. The external electronic device 102 may receive the packet 595.

For example, the electronic device 101 may not receive a packet transmitted from the external electronic device 102 at a next anchor point of the anchor point P9 according to the peripheral latency. For example, the electronic device 101 may turn off (or deactivate) (or save power) the communication circuitry 110 during a connection event in a connection interval corresponding to the next anchor point of the anchor point P9.

As described above, the electronic device 101 may periodically change a state of the communication circuitry 110 between a deactivation state and an activation state to receive only a portion of packets from the external electronic device 102.

However, in case that the external electronic device 102 does not receive a packet of the electronic device 101 during the connection timeout while the communication circuitry 110 of the electronic device 101 is activated, a connection between the electronic device 101 and the external electronic device 102 may be released. Hereinafter, an operation of the electronic device 101 for preventing or inhibiting the communication connection between the electronic device 101 and the external electronic device 102 from being released while reducing power consumed in the electronic device 101 may be described in greater detail.

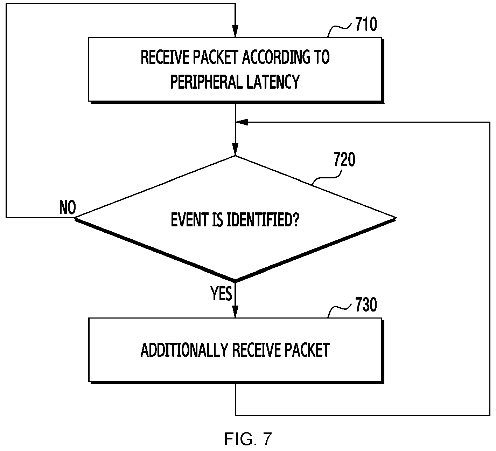

FIG. 7 is a flowchart illustrating an example method in which an electronic device processes an event based on a packet from an external electronic device according to various embodiments.

For a description of FIG. 7, the electronic device 101 and the external electronic device 102 described in FIG. 1 may be referred to. For the description of FIG. 7, FIG. 2A to FIG. 6 may be referred to. Operations of FIG. 7 may be performed after the anchor point P7 of FIG. 5. However, the disclosure is not limited thereto.

Referring to FIG. 7, in operation 710, the electronic device 101 may receive a packet according to peripheral latency. For example, the peripheral latency may not be 0.

For example, the packet may have a format as shown in Table 1 below.

**[Table 1]**

| | | | | |
|---|---|---|---|---|
| Preamble | Access address | Payload | CRC | Constant tone extension |

In Table 1, a preamble field (hereinafter, preamble) may have a length of 1 byte (e.g., in case of LE 1M PHY) or 2 bytes (e.g., in case of LE 2M PHY), and may be used for frequency synchronization, symbol timing prediction, and/or automatic gain control learning of a receiving device (e.g., the electronic device 101). An access address field (hereinafter, access address) may have a length of 4 bytes and may indicate a physical channel for exchanging data between the receiving device (e.g., the electronic device 101) and the external electronic device 102. For example, a payload may be transmitted on the physical channel. For example, when a packet is transmitted on a data physical channel, a payload field may be referred to as a data physical channel protocol data unit (PDU). For example, the payload (or the data physical channel PDU) may have a format as shown in Table 2 below. A cyclic redundancy check (CRC) field (hereinafter, CRC) may have a length of 3 bytes and may be used for checking an error of the payload (or the data physical channel PDU). A constant tone extension (CTE) field (hereinafter, CTE) may be a series of continuously modulated non-whitened 1. According to an embodiment, the constant tone extension may be excluded from a packet.

**[Table 2]**

| | | |
|---|---|---|
| Payload header | Payload | MIC |

In Table 2, a payload header field (hereinafter, payload header) may have a length of 2 or 3 bytes and may have a format as shown in Table 3 below. The payload field (hereinafter, payload) of the Table 2 may have a length of 0 to 251 bytes and may be an LL data PDU or an LL control PDU. A message integrity check (MIC) field (hereinafter, MIC) may have a length of 4 bytes. According to an embodiment, the MIC may be omitted.

**[Table 3]**

| | | | | | | | |
|---|---|---|---|---|---|---|---|
| LL ID | NESN | SN | MD | CP | RFU | Length | CTEInfo |

In Table 3, a link layer (LL) identification (ID) field may have a length of 2 bits. For example, in case that the LL ID is 0b00, the payload of the Table 2 may indicate unspecified data (e.g., reserved for future use (RFU)). For example, in case that the LL ID is 0b01, the payload of the Table 2 may be understood as the LL data PDU, and may indicate a continuous piece (or fragmented data) or an empty PDU of an L2CAP message. For example, in case that the LL ID is 0b10, the payload of the Table 2 may be understood as the LL data PDU, and may indicate a start of the L2CAP message or completion of the L2CAP message. For example, in case that the LL ID is 0b11, the payload of the Table 2 may be understood as the LL control PDU. A next expected sequence number (NESN) field may have a length of 1 bit and may indicate a value that a sequence number (SN) of a packet including new data to be transmitted next will have. A sequence number (SN) field may have a length of 1 bit and may indicate whether a packet includes a new PDU or a last PDU. For example, the SN may be used to identify a packet transmitted by a link layer of a communication link 150. For example, a packet including the new PDU may have a different SN value from a packet including the last PDU. For example, the packet having the same SN value as the packet including the last PDU may be a retransmission packet. A more data (MD) field may have a length of 1 bit and may indicate whether additional data is transmitted in a connection event. A CTEInfo present (CP) field may indicate whether the payload header has a CTEInfo field. A Length field may indicate a Length of the payload and the MIC of the Table 2. The CTEInfo field may indicate information on the constant tone extension.

In operation 720, the electronic device 101 may determine whether an event is identified. For example, the event may be an event indicating whether the external electronic device 102 has received a packet previously transmitted by the electronic device 101 to the external electronic device 102. For example, the previously transmitted packet may be a packet transmitted by the electronic device 101 to the external electronic device 102 during a connection event in a previous connection interval according to the peripheral latency. For example, a current connection interval may be a connection interval including a connection event in which the electronic device 101 receives a packet of the external electronic device 102 according to the operation 710 or an operation 730. For example, in case that the peripheral latency is 1 in a situation in which the event is not identified, the previously transmitted packet may be a packet transmitted from a connection event in a second previous connection interval of the current connection interval. For example, in a situation in which the event is identified, the previously transmitted packet may be a packet transmitted from a connection event in a connection interval immediately preceding the current connection interval or a connection event in the current connection interval. However, the disclosure is not limited thereto. For example, the previously transmitted packet may indicate a packet transmitted by the electronic device 101 to the external electronic device 102 during the connection event in the connection interval immediately preceding the current connection interval. The immediately preceding connection interval may be a connection interval between the previous connection interval and the current connection interval according to the peripheral latency. For example, the previously transmitted packet may be a packet received during the connection event in the current connection interval. However, the disclosure is not limited thereto.

For example, the event may be an event for determining whether the electronic device 101 additionally receives the packet transmitted from the external electronic device 102. For example, the event may be an event for determining whether to transmit a packet indicating a response to the external electronic device 102 in response to the packet additionally received by the electronic device 101. For example, the event may be an event for the electronic device 101 for determining whether to activate communication circuitry 110 to be deactivated according to the peripheral latency. For example, the event may be an event for the electronic device 101 for determining whether to activate the communication circuitry 110 during a connection event in a connection interval to be deactivated according to the peripheral latency. For example, deactivating the communication circuitry 110 according to the peripheral latency may include deactivating the communication circuitry 110 during connection events that the electronic device 101 does not listen. For example, deactivation of the communication circuitry 110 may include the electronic device 101 not supplying power to an antenna of the communication circuitry 110. For example, deactivating the communication circuitry 110 may include the electronic device 101 not opening a window (e.g., a reception window) for receiving a packet.

In an embodiment, the electronic device 101 may determine whether the event is identified based on the packet of the external electronic device 102 received during the connection event in the current connection interval. For example, the electronic device 101 may determine whether the event is identified based on information indicated by the packet of the external electronic device 102.

For example, the electronic device 101 may determine whether the event is identified based on checking the payload header of the packet of the external electronic device 102. For example, the electronic device 101 may determine that the event is identified based on an error being identified in the payload header of the packet of the external electronic device 102.

For example, the electronic device 101 may determine that the event is identified based on a discrepancy between information indicated by the LL ID of the payload header of the packet of the external electronic device 102 and data indicated by the payload of the Table 2. For example, in case that the LL ID of the payload header indicates 0b00, the electronic device 101 may determine that an error is identified in the payload header. For example, the LL ID of the payload header indicates 0b01, but the electronic device 101 may determine that an error is identified in the payload header, in case that the payload of the Table 2, in which the LL ID of a previously received packet is 0b10, does not indicate the start of the L2CAP message. For example, the LL ID of the payload header indicates 0b10, but the electronic device 101 may determine that an error is identified in the payload header, in case that the length of the payload of the Table 2 is 0 (or in case that the Length field indicates the length of the payload as 0). For example, the LL ID of the payload header indicates 0b11, but the electronic device 101 may determine that an error is identified in the payload header, in case that there is no control opcode and/or a parameter in the payload of the Table 2.

For example, the electronic device 101 may determine whether the event is identified based on information indicated by the NESN and information indicated by the SN of the payload header of the packet of the external electronic device 102. For example, the electronic device 101 may determine whether the event is identified based on information indicated by the NESN and information indicated by the SN of the payload header of the packet in which the length of the payload of the Table 2 is 0. For example, the electronic device 101 may determine whether the event is identified based on information indicated by the NESN and information indicated by the SN of the payload header of a normally received packet. For example, the normally received packet may refer to a packet that passes a check of the payload header of the packet and a check of the CRC.

For example, the electronic device 101 may determine whether the event is identified based on difference between a value indicated by the NESN of the packet previously transmitted by the electronic device 101 to the external electronic device 102 and a value indicated by the SN of the packet received by the electronic device 101 during the connection event in the current connection interval. For example, the previously transmitted packet may indicate a packet that the electronic device 101 transmitted to the external electronic device 102 before receiving a packet received during the connection event in the current connection interval.

For example, the electronic device 101 may determine whether the event is identified based on a value indicated by the SN of the packet previously transmitted by the electronic device 101 to the external electronic device 102 being equal to a value indicated by the NESN of the packet received by the electronic device 101 during the connection event in the current connection interval.

In an embodiment, based on determining that the event is identified (yes in operation 720), the electronic device 101 may perform the operation 730. In an embodiment, based on determining that the event is not identified (no in operation 720), the electronic device 101 may perform the operation 710.

In the operation 730, the electronic device 101 may additionally receive a packet. For example, additionally receiving the packet may include the electronic device 101 activating the communication circuitry 110 to additionally receive the packet. For example, additionally receiving the packet may include the electronic device 101 opening the window (or the reception window) for reception, during a connection event (or during a window size in a connection event) in which the external electronic device 102 transmits the packet, to additionally receive the packet. For example, additionally receiving the packet may include the electronic device 101 listening to the connection event to additionally receive the packet. For example, activating the communication circuitry 110 may include supplying power to the antenna of the communication circuitry 110. For example, activating the communication circuitry 110 may include the electronic device 101 operating the communication circuitry 110 with normal power. However, the disclosure is not limited thereto.

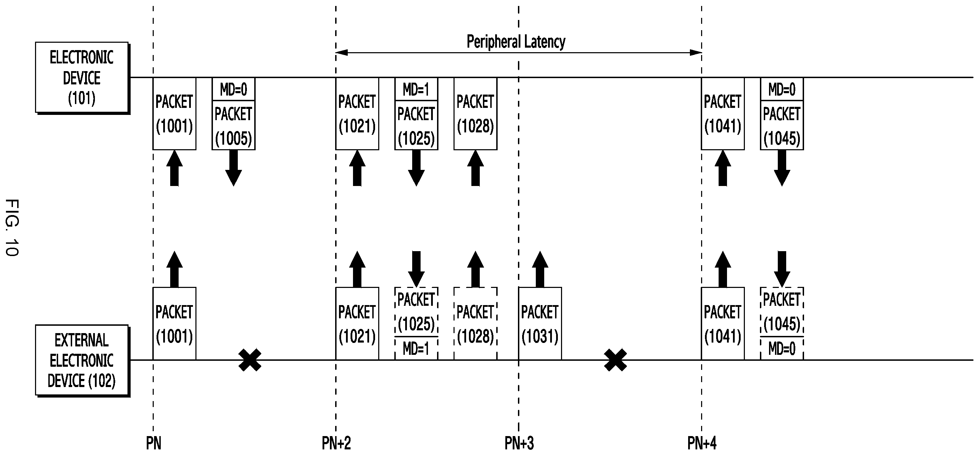

For example, additionally receiving the packet may include the electronic device 101 opening the window (or the reception window) for reception in the specified number of (consecutive) connection events to additionally receive the packet. For example, the specified number of connection events to additionally receive the packet may be determined based on a reception error rate (or a success rate) of the communication link 150 described with reference to FIG. 10 below. For example, the specified number of connection events to additionally receive the packet may be determined based on an open count value of the communication link 150 described with reference to FIG. 10 below. Herein, the open count value may have a value between 1 to the peripheral latency. According to an embodiment, the open count value may be set by the electronic device 101 and/or the external electronic device 102.

For example, additionally receiving the packet may indicate the electronic device 101 receiving the packet from the external electronic device 102 by activating the communication circuitry 110 to be deactivated according to the peripheral latency. For example, additionally receiving the packet may indicate the electronic device 101 receiving the packet from the external electronic device 102 by activating the communication circuitry 110 during the connection event in the connection interval to be deactivated according to the peripheral latency. For example, additionally receiving the packet may indicate the electronic device 101 receiving the packet from the external electronic device 102 by maintaining the communication circuitry 110 in an activated state during the connection event in the current connection interval. For example, additionally receiving the packet may indicate receiving the packet from the external electronic device 102 by activating the communication circuitry 110 during at least a portion of a connection event among connection events in which the communication circuitry 110 is deactivated according to the peripheral latency. For example, additionally receiving the packet may indicate the electronic device 101 receiving the packet from the external electronic device 102 by activating the communication circuitry 110 during at least a portion of a connection event among connection events in which the electronic device 101 does not listen according to the peripheral latency. According to an embodiment, activating the communication circuitry 110 during the connection event in the connection interval to be deactivated may include deactivating (or ignoring) the peripheral latency.

For example, the electronic device 101 may activate the communication circuitry 110 during a connection event in a next connection interval. For example, the electronic device 101 may activate the communication circuitry 110 during at least the window size (or during the reception window) based on an anchor point of the next connection interval.

For example, the electronic device 101 may additionally receive the packet from the external electronic device 102 while the communication circuitry 110 is activated. In an embodiment, the electronic device 101 may transmit, in response to additionally receiving the packet from the external electronic device 102, a packet with increased transmission power of a packet to be transmitted to the external electronic device 102. In an embodiment, the electronic device 101 may transmit a packet with gradually increased transmission power of a packet to be transmitted to the external electronic device 102. For example, a connection event (or the number of connection events) in which the external electronic device 102 does not receive the packet to be transmitted by the electronic device 101 increases, the electronic device 101 may gradually increase the transmission power of the packet to be transmitted to the external electronic device 102.

For example, the electronic device 101 may perform the operation 720 again based on the packet additionally received. For example, the electronic device 101 may perform the operation 720 again based on the packet additionally received during the specified number of connection events.

For example, the electronic device 101 may reactivate the peripheral latency based on a last connection event among the specified number of connection events after the packet additionally received during the specified number of connection events. Reactivating the peripheral latency may include not receiving the packet transmitted from the external electronic device 102 during connection events according to the peripheral latency following the last connection event. Reactivating the peripheral latency may include receiving the packet transmitted from the external electronic device 102 after connection events according to the peripheral latency following the last connection event. However, the disclosure is not limited thereto. For example, the electronic device 101 may reactivate the peripheral latency based on one connection event based on determining that the external electronic device 102 has received the packet transmitted by the electronic device 101 normally in the one connection event of the specified number of connection events.

As described above, the electronic device 101 may expand an opportunity to transmit a packet of the electronic device 101 to the external electronic device 102 before a connection timeout, by activating the communication circuitry 110 even during a time span to be deactivated, based on determining that the external electronic device 102 has not received the packet of the electronic device 101, while activating and deactivating the communication circuitry 110 according to the peripheral latency.

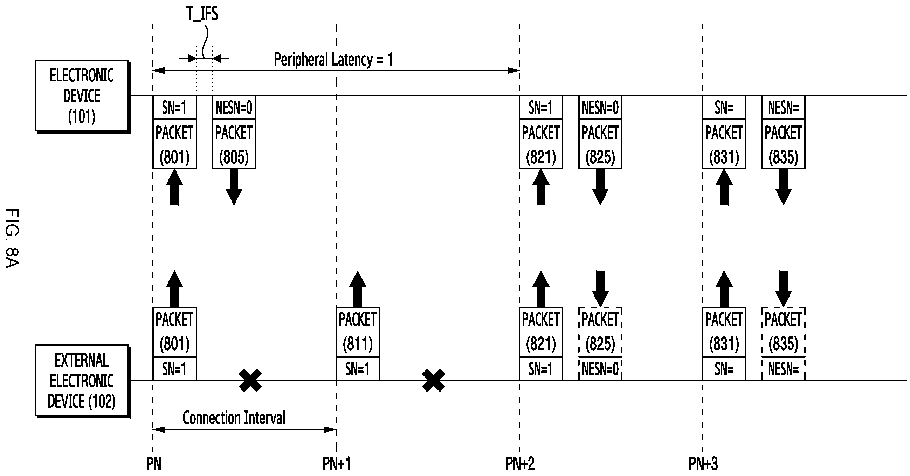

FIG. 8A is a diagram illustrating an example operation in which an electronic device identifies an event based on a packet from an external electronic device, according to various embodiments.

For a description of FIG. 8A, the electronic device 101 and the external electronic device 102 described in FIG. 1 may be referred to. For the description of FIG. 8A, FIG. 2A to FIG. 7 may be referred to. Situations of FIG. 8A may be performed after the anchor point P7 of FIG. 5. However, the disclosure is not limited thereto.

Referring to FIG. 8A, the external electronic device 102 may transmit a packet 801 at an anchor point PN. For example, an SN of the packet 801 may indicate 1. The electronic device 101 may receive the packet 801 at the anchor point PN. The electronic device 101 may transmit a packet 805 after a specified time (e.g., T_IFS) after receiving the packet 801. For example, the electronic device 101 may determine a value of an NESN to indicate whether the packet 801 is received normally based on receiving the packet 801 normally. For example, the electronic device 101 may determine the value of the NESN to indicate a value (or a value different from a value of the SN) that adds 1 to a value of the SN indicated by the packet 801 based on receiving the packet 801 normally. For example, an NESN of the packet 805 may indicate 0. During a connection event in a connection interval starting from the anchor point PN, the external electronic device 102 may not receive a packet indicating a response to the packet 801.

For example, the external electronic device 102 may transmit a packet 811 at a next anchor point PN+1. For example, the external electronic device 102 may transmit the packet 811 (or a retransmission packet 811 of the packet 801) in which an SN indicates 1 based on not receiving the packet indicating the response to the packet 801. For example, the electronic device 101 may deactivate communication circuitry 110 during the connection event in the connection interval starting from the anchor point PN according to peripheral latency (e.g., 1). For example, the electronic device 101 may not receive a packet from the external electronic device 102 during the connection event in the connection interval starting from the anchor point PN according to the peripheral latency (e.g., 1). During a connection event in a connection interval starting from the anchor point PN+1, the external electronic device 102 may not receive a packet indicating a response to the packet 811.

For example, the external electronic device 102 may transmit a packet 821 at a next anchor point PN+2. For example, the external electronic device 102 may transmit the packet 811 in which the SN indicates 1 based on not receiving the packet indicating the response to the packet 811.

For example, the electronic device 101 may receive the packet 821 at the anchor point PN+2.

In an embodiment, the electronic device 101 may transmit a packet 825 after the specified time (e.g., T_IFS) after receiving the packet 821. For example, the electronic device 101 may transmit the packet 825 with an NESN (e.g., 0) set to the external electronic device 102 to indicate that the packet 821 is received at the anchor point PN+2.

For example, the electronic device 101 may determine the external electronic device 102 has not received the packet 805 previously transmitted by the electronic device 101 to the external electronic device 102 based on a difference between an NESN (e.g., 0) of the previously transmitted packet 805 and an SN (e.g., 1) of the currently received packet 821. For example, the electronic device 101 may determine that an event is identified based on the difference between the NESN (e.g., 0) of the previously transmitted packet 805 and the SN (e.g., 1) of the currently received packet 821.

In an embodiment, based on determining that the event is identified, the electronic device 101 may determine to additionally receive a packet. In an embodiment, based on determining that the event is identified, the electronic device 101 may determine to activate the communication circuitry 110 to be deactivated according to the peripheral latency. For example, additionally receiving the packet may indicate that the electronic device 101 receives a packet 831 to be transmitted from the external electronic device 102 by activating the communication circuitry 110 to be deactivated during an anchor point PN+3 according to the peripheral latency. For example, deactivating the communication circuitry 110 according to the peripheral latency may include deactivating the communication circuitry 110 during connection events that the electronic device 101 does not listen according to the peripheral latency. For example, activating the communication circuitry 110 to be deactivated according to the peripheral latency may include activating the communication circuitry 110 during at least a portion of a connection event among connection events in which the communication circuitry 110 is deactivated according to the peripheral latency. For example, activating the communication circuitry 110 to be deactivated according to the peripheral latency may include deactivating (or ignoring) the peripheral latency.

For example, during a connection event in a connection interval starting from the anchor point PN+2, the external electronic device 102 may determine the packet 831 to be transmitted at the next anchor point PN+3 according to whether the packet 825 indicating a response to the packet 821 is received.

For example, the external electronic device 102 may determine an SN of the packet 831 to be transmitted at the next anchor point PN+3 as 0 based on receiving the packet 825 indicating the response to the packet 821. For example, the external electronic device 102 may determine the SN of the packet 831 to be transmitted at the next anchor point PN+3 as 1 based on not receiving the packet 825 indicating the response to the packet 821.

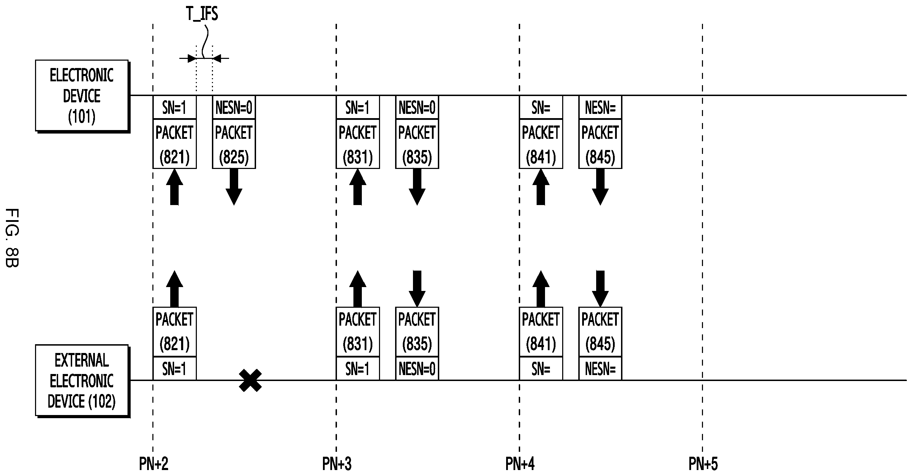

Hereinafter, referring to FIG. 8B, situations of a case in which the external electronic device 102 does not receive the packet 825 indicating the response to the packet 821 may be described.

FIG. 8B is a diagram illustrating an example operation in which an electronic device additionally receives a packet from an external electronic device, according to various embodiments.

For a description of FIG. 8B, the electronic device 101 and the external electronic device 102 described in FIG. 1 may be referred to. For the description of FIG. 8B, FIG. 2A to FIG. 7 may be referred to. Situations of FIG. 8B may be performed after the anchor point P7 of FIG. 5. However, the disclosure is not limited thereto.

Referring to FIG. 8B, for example, the external electronic device 102 may transmit a packet 831 at a next anchor point PN+3. For example, the external electronic device 102 may transmit the packet 831 in which an SN indicates 1 based on not receiving a packet 825 indicating a response to a packet 821.

For example, the electronic device 101 may activate communication circuitry 110 to be deactivated according to peripheral latency at the anchor point PN+3. For example, the electronic device 101 may activate the communication circuitry 110 to be deactivated according to the peripheral latency during a connection event in a connection interval starting from the anchor point PN+3.

For example, the electronic device 101 may receive the packet 831 through the activated communication circuitry 110. The electronic device 101 may transmit a packet 835 after a specified time (e.g., T_IFS) after receiving the packet 831. For example, the electronic device 101 may transmit the packet 835 with an NESN (e.g., 0) set to the external electronic device 102 to indicate that the packet 831 is received at the anchor point PN+3.

For example, the electronic device 101 may determine that the external electronic device 102 has not received the packet 825 previously transmitted by the electronic device 101 to the external electronic device 102 based on a difference between an NESN (e.g., 0) of the previously transmitted packet 825 and the SN (e.g., 1) of the currently received packet 831. For example, the electronic device 101 may determine that an event is identified based on the difference between the NESN (e.g., 0) of the previously transmitted packet 825 and the SN (e.g., 1) of the currently received packet 831.

In an embodiment, based on determining that the event is identified, the electronic device 101 may determine to additionally receive a packet. In an embodiment, the electronic device 101 may receive a packet 841 to be transmitted from the external electronic device 102 by activating the communication circuitry 110 to be deactivated during an anchor point PN+4 according to the peripheral latency.

Similarly, during the connection event in the connection interval starting from the anchor point PN+3, the external electronic device 102 may determine the packet 841 to be transmitted from the next anchor point PN+4, according to whether the packet 835 indicating a response to the packet 831 is received. Accordingly, according to a value of an SN indicated by the packet 841 and a value indicated by the NESN of the previously transmitted packet 835, it may be determined whether the electronic device 101 activates the communication circuitry 110 during a next anchor point PN+5. In addition, the electronic device 101 transmits a packet 845 indicating that the packet 841 is received to the external electronic device 102, and according to whether the external electronic device 102 receives the packet 845, during the next anchor point (PN+5), whether the electronic device 101 activates the communication circuitry 110 during the next anchor point may vary.

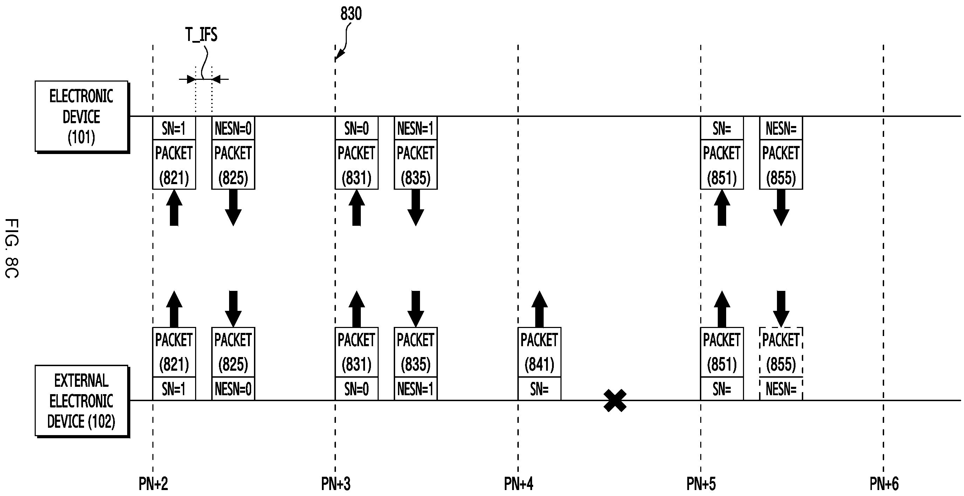

Hereinafter, situations of a case in which the external electronic device 102 receives the packet 825 indicating the response to the packet 821 may be described with reference to FIG. 8C.

FIG. 8C is a diagram illustrating an example operation in which an electronic device additionally receives a packet from an external electronic device, according to various embodiments.

For a description of FIG. 8C, the electronic device 101 and the external electronic device 102 described in FIG. 1 may be referred to. For the description of FIG. 8C, FIG. 2A to FIG. 7 may be referred to. Situations of FIG. 8C may be performed after the anchor point P7 of FIG. 5. However, the disclosure is not limited thereto.

Referring to FIGS. 8A and 8C, for example, the external electronic device 102 may transmit a packet 831 at a next anchor point PN+3. For example, the external electronic device 102 may transmit the packet 831 in which an SN indicates 0 based on receiving a packet 825 indicating a response to a packet 821.

For example, the electronic device 101 may activate communication circuitry 110 to be deactivated according to peripheral latency at the anchor point PN+3. For example, the electronic device 101 may activate the communication circuitry 110 to be deactivated according to the peripheral latency during a connection event in a connection interval starting from the anchor point PN+3.

For example, the electronic device 101 may receive the packet 831 through the activated communication circuitry 110. The electronic device 101 may transmit the packet 835 after a specified time (e.g., T_IFS) after receiving the packet 831. For example, the electronic device 101 may transmit the packet 835 in which an NESN (e.g., 1) is set to the external electronic device 102 to indicate that the packet 831 is received at the anchor point PN+3.

For example, the electronic device 101 may determine that the external electronic device 102 has received the packet 825 previously transmitted by the electronic device 101 to the external electronic device 102, based on an NESN (e.g., 0) of the previously transmitted packet 825 and an SN (e.g., 0) of the currently received packet 831 being the same. For example, the electronic device 101 may determine that an event is not identified, based on the NESN (e.g., 0) of the previously transmitted packet 825 and the SN (e.g., 0) of the currently received packet 831 being the same.

In an embodiment, based on determining that the event is not identified, the electronic device 101 may determine to receive a packet according to the peripheral latency based on the anchor point PN+3 of a current connection event. In an embodiment, based on determining that the event is not identified, the electronic device 101 may reactivate deactivated peripheral latency based on the anchor point PN+3 of the current connection event. For example, receiving the packet according to the peripheral latency may include determining the anchor point PN+3 of the current connection event as a reference anchor point 830. For example, the electronic device 101 may not receive a packet transmitted from the external electronic device 102 during connection events according to the peripheral latency among connection events following a connection event starting from the reference anchor point 830. For example, receiving the packet according to the peripheral latency may include receiving a packet from a connection event to be listened to by the electronic device 101 according to the peripheral latency among connection events after the reference anchor point 830. Reactivating the peripheral latency based on the reference anchor point 830 may include deactivating the communication circuitry 110 during the number of connection intervals according to the peripheral latency among connection intervals following the connection interval initiated from the reference anchor point 830.

For example, based on the reference anchor point 830, the electronic device 101 may not receive a packet 841 from the external electronic device 102 during connection events in the number of connection intervals according to the peripheral latency starting from an anchor point PN+4 following the anchor point PN+3. For example, a value of an SN of the packet 841 may vary according to whether the external electronic device 102 receives the packet 835 indicating a response. For example, the SN of the packet 841 may be different from an SN of the packet 831 as the packet 835 is received. For example, the SN of the packet 841 may be the same as the SN of the packet 831 as the packet 835 is not received.

For example, the external electronic device 102 may transmit a packet 851 at a next anchor point PN+1 of the anchor point PN+4. For example, the external electronic device 102 may transmit the packet 851 having the same SN as the SN of the packet 841 based on not receiving a packet indicating a response to the packet 841.

For example, the electronic device 101 may receive the packet 851 at an anchor point PN+5. The electronic device 101 may transmit a packet 855 after the specified time (e.g., T_IFS) after receiving the packet 851. For example, the electronic device 101 may transmit the packet 855 with an NESN set to the external electronic device 102 to indicate that the packet 851 is received at the anchor point PN+5.

For example, the electronic device 101 may determine whether the external electronic device 102 has received the packet 835 previously transmitted by the electronic device 101 to the external electronic device 102, based on comparing an NESN of the previously transmitted packet 835 with a SN of the currently received packet 851. For example, the electronic device 101 may determine that the external electronic device 102 has not received the previously transmitted packet 835 based on a difference between the NESN of the previously transmitted packet 835 and the SN of the currently received packet 851. For example, the electronic device 101 may determine that the external electronic device 102 has received the previously transmitted packet 835 based on the NESN of the previously transmitted packet 835 and the SN of the currently received packet 851 being the same.

For example, the electronic device 101 may deactivate the communication circuitry 110 during a connection event in a connection interval starting from the next anchor point PN+5 according to the peripheral latency, based on the external electronic device 102 receiving the previously transmitted packet 835. For example, the electronic device 101 may activate the communication circuitry 110 during the connection event in the connection interval starting from the next anchor point PN+5 to be deactivated according to the peripheral latency, based on the external electronic device 102 not receiving the previously transmitted packet 835.

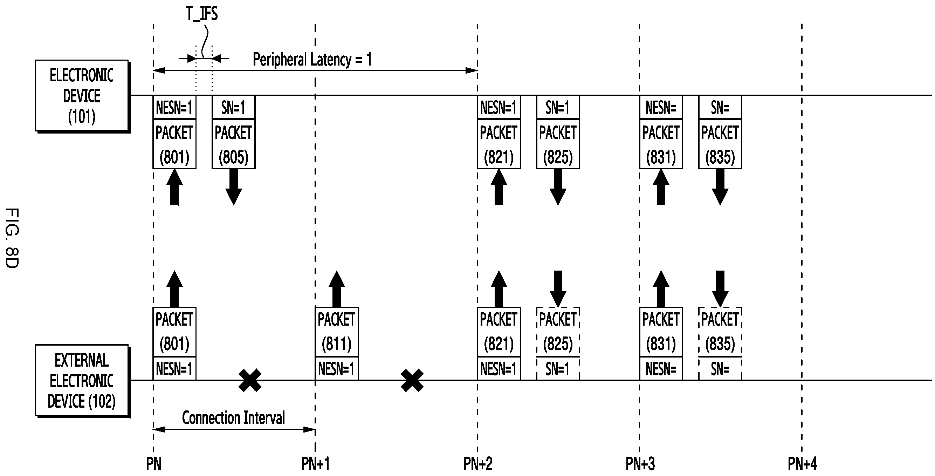

FIG. 8D is a diagram illustrating an example operation in which an electronic device identifies an event based on a packet from an external electronic device, according to various embodiments.

For a description of FIG. 8D, the electronic device 101 and the external electronic device 102 described in FIG. 1 may be referred to. For the description of FIG. 8D, FIG. 2A to FIG. 7 may be referred to. Situations of FIG. 8D may be performed after the anchor point P7 of FIG. 5. However, the disclosure is not limited thereto.

The situations of FIG. 8D may indicate situations in which the electronic device 101 determines whether the external electronic device 102 has received a packet previously transmitted by the electronic device 101 to the external electronic device 102 by comparing a value indicated by an SN of a packet previously transmitted by the electronic device 101 to the external electronic device 102 with a value indicated by an NESN of a packet received by the electronic device 101 during a current connection interval.

Referring to FIG. 8D, the external electronic device 102 may transmit a packet 801 at an anchor point PN. For example, an NESN of the packet 801 may indicate 1. The electronic device 101 may receive the packet 801 at the anchor point PN. The electronic device 101 may transmit a packet 805 after a specified time (e.g., T_IFS) after receiving the packet 801. For example, an SN of the packet 805 may indicate 1. During a connection event in a connection interval starting from the anchor point PN, the external electronic device 102 may not receive a packet indicating a response to the packet 801.

For example, the external electronic device 102 may transmit a packet 811 at a next anchor point PN+1. For example, the external electronic device 102 may transmit the packet 811 in which an NESN indicates 1 based on not receiving the packet indicating the response to the packet 801. For example, the electronic device 101 may deactivate communication circuitry 110 during the connection event in the connection interval starting from the anchor point PN according to peripheral latency (e.g., 1). For example, the electronic device 101 may not receive a packet from the external electronic device 102 during the connection event in the connection interval starting from the anchor point PN according to the peripheral latency (e.g., 1). During a connection event in a connection interval starting from the anchor point PN+1, the external electronic device 102 may not receive a packet indicating a response to the packet 811.

For example, the external electronic device 102 may transmit a packet 821 at a next anchor point PN+2. For example, the external electronic device 102 may transmit the packet 811 in which the NESN indicates 1 based on not receiving the packet indicating the response to the packet 811.

For example, the electronic device 101 may receive the packet 821 at the anchor point PN+2. The electronic device 101 may transmit a packet 825 after the specified time (e.g., T_IFS) after receiving the packet 821.

For example, the electronic device 101 may determine that the external electronic device 102 has not received the packet 805 previously transmitted by the electronic device 101 to the external electronic device 102 based on the SN (e.g., 1) of the previously transmitted packet 805 and an NESN (e.g., 1) of the currently received packet 821 being the same. For example, the electronic device 101 may determine that an event is identified based on the SN (e.g., 1) of the previously transmitted packet 805 and the NESN (e.g., 1) of the currently received packet 821 being the same.

In an embodiment, based on determining that the event is identified, the electronic device 101 may determine to additionally receive the packet. In an embodiment, based on determining that the event is identified, the electronic device 101 may determine to activate the communication circuitry 110 to be deactivated according to the peripheral latency. For example, additionally receiving the packet may indicate that the electronic device 101 receives a packet 831 to be transmitted from the external electronic device 102 by activating the communication circuitry 110 to be deactivated during an anchor point PN+3 according to the peripheral latency.

For example, during a connection event in a connection interval starting from the anchor point PN+2, the external electronic device 102 may determine the packet 831 to be transmitted at the next anchor point PN+3 according to whether the packet 825 indicating a response to the packet 821 is received.

For example, the external electronic device 102 may determine an NESN of the packet 831 to be transmitted at the next anchor point PN+3 as 0 based on receiving the packet 825 indicating the response to the packet 821. For example, the external electronic device 102 may determine the NESN of the packet 831 to be transmitted at the next anchor point PN+3 as 1 based on not receiving the packet 825 indicating the response to the packet 821.

For example, the electronic device 101 may receive the packet 831 at the anchor point PN+3. The electronic device 101 may transmit a packet 835 after the specified time (e.g., T_IFS) after receiving the packet 831.

For example, the electronic device 101 may determine whether the external electronic device 102 has received the packet 825 previously transmitted by the electronic device 101 to the external electronic device 102 based on comparing an SN of the previously transmitted packet 825 with the NESN of the currently received packet 831. For example, the electronic device 101 may determine that the external electronic device 102 has received the previously transmitted packet 825 based on a difference between the SN of the previously transmitted packet 825 and the NESN of the currently received packet 831. For example, the electronic device 101 may determine that the external electronic device 102 has not received the previously transmitted packet 825 based on the SN of the previously transmitted packet 825 and the NESN of the currently received packet 831 being the same.

For example, the electronic device 101 may deactivate the communication circuitry 110 during a connection event in a connection interval starting from a next anchor point PN+4 according to the peripheral latency, based on the external electronic device 102 receiving the previously transmitted packet 825. For example, the electronic device 101 may activate the communication circuitry 110 during the connection event in the connection interval starting from the next anchor point PN+4 to be deactivated according to the peripheral latency, based on the external electronic device 102 not receiving the previously transmitted packet 825.

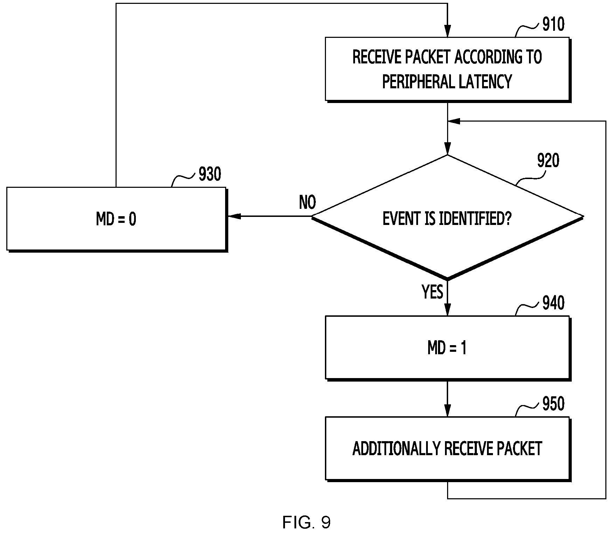

FIG. 9 is a flowchart illustrating an example method in which an electronic device processes an event based on a packet from an external electronic device, according to various embodiments.

For a description of FIG. 9, the electronic device 101 and the external electronic device 102 described in FIG. 1 may be referred to. For the description of FIG. 9, FIG. 2A to FIG. 8D may be referred to. Operations of FIG. 9 may be performed after the anchor point P7 of FIG. 5. However, the disclosure is not limited thereto.

Referring to FIG. 9, in an operation 910, the electronic device 101 may receive a packet according to peripheral latency. For example, the peripheral latency may not be 0. In an embodiment, the operation 910 may correspond to the operation 710 of FIG. 7.

In operation 920, the electronic device 101 may determine whether an event is identified. In an embodiment, the operation 920 may correspond to the operation 720 of FIG. 7.

For example, the event may be an event indicating whether the external electronic device 102 has received a packet previously transmitted from the electronic device 101 to the external electronic device 102. For example, the previously transmitted packet may be a packet transmitted by the electronic device 101 to the external electronic device 102 during a connection event in a previous connection interval according to the peripheral latency. For example, the previously transmitted packet may be the packet transmitted by the electronic device 101 to the external electronic device 102 in response to a packet transmitted by the external electronic device 102 to the electronic device 101 during a connection event in a current connection interval according to the peripheral latency. For example, a current connection event may be a connection interval in which the electronic device 101 receives a packet of the external electronic device 102 according to the operation 910 or an operation 940 of FIG. 9.

For example, the event may be an event for determining whether the electronic device 101 additionally receives the packet transmitted from the external electronic device 102. For example, the event may be an event for determining whether the electronic device 101 to additionally receive a packet by extending a length of the current connection event to the external electronic device 102. For example, the event may be an event for determining whether to transmit a packet indicating a response to the external electronic device 102 in response to the packet additionally received by the electronic device 101.

In an embodiment, the electronic device 101 may determine whether the event is identified based on the packet of the external electronic device 102 received during the connection event in the current connection interval. For example, the electronic device 101 may determine whether the event is identified based on information indicated by the packet of the external electronic device 102.

In an embodiment, based on determining that the event is identified (yes in operation 920), the electronic device 101 may perform operation 940. In an embodiment, based on determining that the event is not identified (no in operation 920), the electronic device 101 may perform operation 930.

In operation 930, the electronic device 101 may set MD to 0. For example, the electronic device 101 may set a value of the MD of a payload header of the packet to be transmitted to the external electronic device 102 to 0. For example, the electronic device 101 may set the value of the MD to 0 such that the external electronic device 102 does not transmit an additional packet during the current connection event. For example, the electronic device 101 may set the value of the MD to 0 such that a length of the current connection event is not extended.

In an embodiment, the electronic device 101 may transmit a packet in which the MD is 0 to the external electronic device 102. In an embodiment, the external electronic device 102 may not extend the length of the current connection event based on receiving the packet in which the MD is 0. For example, the external electronic device 102 may not transmit the packet to the electronic device 101 in the current connection event based on receiving the packet in which the MD is 0. For example, the external electronic device 102 may transmit the packet to the electronic device 101 at a connection interval following the current connection interval, based on receiving the packet in which the MD is 0. Thereafter, the electronic device 101 may receive a packet according to the peripheral latency among packets transmitted by the external electronic device 102 at connection events in connection intervals.

In operation 940, the electronic device 101 may set the MD to 1. For example, the electronic device 101 may set the value of the MD of the payload header of the packet to be transmitted to the external electronic device 102 to 1. For example, the electronic device 101 may set the value of the MD to 1 such that the external electronic device 102 transmits an additional packet during the current connection event. For example, the electronic device 101 may set the value of the MD to 1 such that the length of the current connection event is extended.

In an embodiment, the electronic device 101 may transmit a packet in which the MD is 1 to the external electronic device 102. For example, the electronic device 101 may request the external electronic device 102 to extend the length of the current connection event (in the current connection interval) by setting the MD of the packet to be transmitted to the external electronic device 102 to 1.

In operation 950, the electronic device 101 may additionally receive a packet. In an embodiment, the operation 950 may correspond to the operation 730 of FIG. 7.

For example, additionally receiving the packet may indicate the electronic device 101 receiving the packet from the external electronic device 102 by activating communication circuitry 110 in a connection event that extends in the current connection interval.

For example, the electronic device 101 may maintain the communication circuitry 110 in an activated state during the connection event that extends in the current connection interval based on setting the MD of the packet to be transmitted to the external electronic device 102 to 1. For example, the electronic device 101 may maintain the communication circuitry 110 in the activated state up to a time span to which the additional packet is to be transmitted during the connection event that extends in the current connection interval based on the external electronic device 102 receiving the packet in which at least the MD is 1, based on setting the MD of the packet to be transmitted to the external electronic device 102 to 1.

For example, the electronic device 101 may determine that the event is released (or unidentified) based on the external electronic device 102 transmitting the additional packet during the connection event in the current connection interval. For example, the electronic device 101 may determine that the event is maintained (or identified) based on the external electronic device 102 not transmitting the additional packet during the current connection interval.

For example, based on the external electronic device 102 transmitting the additional packet during the current connection interval, the electronic device 101 may deactivate the communication circuitry 110 during a connection interval to be deactivated according to the peripheral latency.

For example, based on the external electronic device 102 not transmitting the additional packet during the current connection interval, the electronic device 101 may activate the communication circuitry 110 during the connection interval to be deactivated according to the peripheral latency.

As described above, the electronic device 101 may expand an opportunity to transmit the packet of the electronic device 101 to the external electronic device 102 in the current connection event without waiting for a next connection event. In addition, the electronic device 101 may expand the opportunity to transmit the packet of the electronic device 101 to the external electronic device 102 before a connection timeout, by activating the communication circuitry 110 even during a time span to be deactivated, based on not receiving the additional packet from the external electronic device 102 in the current connection event.

In FIG. 9, the electronic device 101 is illustrated as setting the MD to 1 according to the event, but this is only an example. According to an embodiment, the electronic device 101 may set the MD of the packet always transmitted to the external electronic device 102 to 1 in a time span in which the peripheral latency is applied.

According to an embodiment, the electronic device 101 may set the MD of a portion of packet among packets always transmitted to the external electronic device 102 to 1. For example, the partial packet may be a packet selected according to a specified period. For example, the partial packet may be a packet transmitted to the external electronic device 102 at a partial connection interval selected according to the specified period among connection intervals according to the peripheral latency.

FIG. 10 is a diagram illustrating an example operation in which an electronic device obtains additional data based on a packet from an external electronic device, according to various embodiments.

For a description of FIG. 10, the electronic device 101 and the external electronic device 102 described in FIG. 1 may be referred to. For the description of FIG. 10, FIG. 2A to FIG. 9 may be referred to. Situations of FIG. 10 may be performed after the anchor point P7 of FIG. 5. However, the disclosure is not limited thereto.

Referring to FIG. 10, the external electronic device 102 may transmit a packet 1001 at an anchor point PN. The electronic device 101 may receive the packet 1001 at the anchor point PN. The electronic device 101 may transmit a packet 1005 after a specified time (e.g., T_IFS) after receiving the packet 1001. For example, MD of the packet 1005 may indicate 0. During a connection event in a connection interval starting from the anchor point PN, the external electronic device 102 may not receive a packet indicating a response to the packet 1001.

For example, the electronic device 101 may receive a packet 1021 transmitted from an anchor point PN+2 according to peripheral latency.

For example, the electronic device 101 may determine whether an event is identified based on the packet 1021 of the external electronic device 102 received during a current connection interval. For example, the electronic device 101 may determine whether the external electronic device 102 has received the packet 1005 based on information indicated by the packet 1021 of the external electronic device 102.

For example, based on comparing an NESN of the previously transmitted packet 1005 with an SN of the currently received packet 1021, the electronic device 101 may determine whether the external electronic device 102 has received the packet 1005. For example, based on comparing an SN of the previously transmitted packet 1005 with an NESN of the currently received packet 1021, it may determine whether the external electronic device 102 has received the packet 1005. For example, based on verifying an error in a payload header of a packet of the currently received packet 1021, it may determine whether the external electronic device 102 has received the packet 1005.

For example, the electronic device 101 may set MD of a packet 1025 to 1 such that the external electronic device 102 transmits an additional packet 1028 during a connection event in the current connection interval based on determining that the event is identified based on the packet 1021.

For example, the electronic device 101 may transmit the packet 1025 in which the MD is 1 to the external electronic device 102.

For example, the external electronic device 102 may receive the packet 1025 indicating a response to the packet 1021. For example, the external electronic device 102 may transmit the additional packet 1028 in a connection event in a connection interval starting from the current anchor point PN+2 based on receiving the packet 1025 in which the MD is 1.

For example, the electronic device 101 may maintain communication circuitry 110 in an activated state during a current connection interval (e.g., a connection interval according to the anchor point PN+2) based on transmitting the packet 1025 in which the MD is 1. For example, the electronic device 101 may deactivate the communication circuitry 110 during a connection interval (e.g., a connection interval according to an anchor point PN+3) to be deactivated according to the peripheral latency based on receiving the packet 1028 while the communication circuitry 110 is active. Accordingly, the electronic device 101 may receive a packet 1041 transmitted from a next anchor point PN+4 according to the peripheral latency. The electronic device 101 may transmit a packet 1045 in which MD is 0 at the next anchor point PN+4 to the external electronic device 102 according to the peripheral latency. In this case, the external electronic device 102 may receive the packet 1045.

According to an embodiment, the external electronic device 102 may not receive the packet 1025 indicating the response to the packet 1021. For example, the external electronic device 102 may not transmit the additional packet 1028 in the connection event in the connection interval starting from the current anchor point PN+2 based on not receiving the packet 1025 in which the MD is 1.

For example, the electronic device 101 may maintain the communication circuitry 110 in the activated state during the current connection interval (e.g., the connection interval according to the anchor point PN+2) based on transmitting the packet 1025 in which the MD is 1. For example, the electronic device 101 may not receive the packet 1028 by not transmitting the additional packet 1028. In this case, the electronic device 101 may determine that the external electronic device 102 has not received the packet 1025. Accordingly, the electronic device 101 may activate the communication circuitry 110 during the connection interval (e.g., the connection interval according to the anchor point PN+3) to be deactivated according to the peripheral latency.

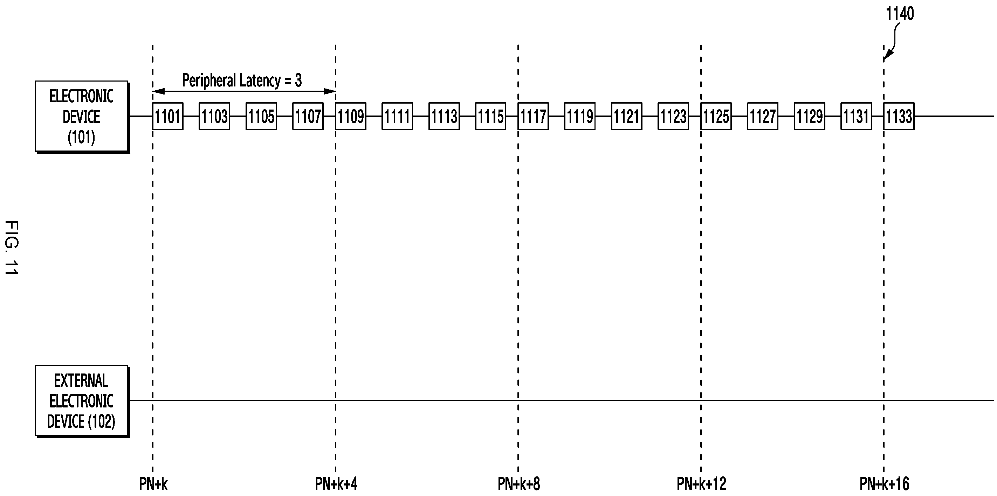

FIG. 11 is a diagram illustrating an example operation in which an electronic device changes frequency for obtaining additional data based on a packet from an external electronic device, according to various embodiments.

For a description of FIG. 11, the electronic device 101 and the external electronic device 102 described in FIG. 1 may be referred to. For the description of FIG. 11, FIG. 2A to FIG. 10 may be referred to. Situations of FIG. 11 may be performed after the anchor point P7 of FIG. 5. However, the disclosure is not limited thereto.

Referring to FIG. 11, peripheral latency may be 3. For example, the external electronic device 102 may receive a packet from a portion of connection intervals 1101, 1109, 1117, and 1127, among connection intervals 1101 to 1131 of the electronic device 101.

For example, the electronic device 101 may identify the external electronic device 102 not receiving a packet transmitted by the electronic device 101 in a connection interval before a connection interval 1101 according to the peripheral latency based on a packet transmitted from the connection interval 1101. Thereafter, in all intervals 1103 to 1131, it may be assumed that the external electronic device 102 does not receive a packet transmitted by the electronic device 101.

For example, in case of identifying that the external electronic device 102 does not receive the packet transmitted by the electronic device 101, the electronic device 101 may determine frequency of activating communication circuitry 110 in consideration of a connection timeout point 1140.

For example, the electronic device 101 may identify a reception error rate (or a success rate) of a communication link 150 (while using peripheral latency). The reception error rate may be calculated based on error situations. For example, the reception error rate may be calculated based on an exponential moving average (EMA). For example, the reception error rate may be calculated based on Equation 1 below. [Equation 1] $EMA \left(t\right) = value \left(t\right) * w + EMA \left(t-1\right) * \left(1-w\right)$

In Equation 1, the EMA t may indicate a reception error rate at a time point t (or a connection event at the time point t). The value t may be a value indicating whether an error occurs at the time point t (or the connection event at the time point t). For example, in case of an error situation at the time point t (or the connection event at the time point t), the value t may be 0. For example, in case of no error situation at the time point t (or the connection event at the time point t), the value t may be 1. The w may be a weight. For example, the w may be 0.25. In an embodiment, the EMA t-1 may indicate a reception error rate at a time point t-1 (or a connection event at the time point t-1).

For example, error situations may include a difficult situation in opening a reception window at an anchor point. For example, the error situations may include a situation in which an event (e.g., the event described with reference to FIG. 7) occurs. For example, the error situations may include a situation in which a mismatch of a payload header of a packet occurs. For example, the error situations may include a situation (e.g., a mismatch between an NESN and an SN) in which an SN mismatch of a packet occurs. For example, the mismatch between the NESN and the SN may include a situation in which an NESN of a packet previously transmitted by the electronic device 101 and an SN of a packet currently transmitted by the external electronic device 102 are different. For example, the mismatch between the NESN and the SN may include a situation in which an SN of the packet previously transmitted by the electronic device 101 and an NESN of the packet currently transmitted by the external electronic device 102 are the same. However, the disclosure is not limited thereto.

For example, in case of identifying that the external electronic device 102 does not receive the packet transmitted by the electronic device 101, the electronic device 101 may activate the communication circuitry 110 based on the number of additional openings identified based on the reception error rate. For example, the electronic device 101 may activate the communication circuitry 110 based on the number of additional openings identified based on comparing the reception error rate and reference values. For example, the communication circuitry 110 may be activated (or the reception window is opened) in a number of connection events based on the reception error rate being greater than or equal to a first reference value (e.g., 0.3). For example, the communication circuitry 110 may be activated (or the reception window is opened) in b number of connection events based on the reception error rate being greater than or equal to a second reference value (e.g., 0.5). For example, the communication circuitry 110 may be activated (or the reception window is opened) in c number of connection events based on the reception error rate being greater than or equal to a third reference value (e.g., 0.7). In an embodiment, the a (e.g., 1) may be less than the b (e.g., 2), and the b may be less than the c (e.g., 3).

For example, the electronic device 101 may activate the communication circuitry 110 based on an open count value. Herein, the open count value may have a value between 1 to the peripheral latency. According to an embodiment, the open count value may be set by the electronic device 101 and/or the external electronic device 102.

For example, the electronic device 101 may deactivate (or ignore) the peripheral latency during connection events determined by the number of additional openings (or the open count value). For example, the electronic device 101 may activate the peripheral latency in a connection event after connection events determined by the number of additional openings (or the open count value).

For example, the electronic device 101 may activate the communication circuitry 110 in m number of connection intervals among connection intervals 1103, 1105, and 1107 determined to be deactivated. For example, the electronic device 101 may deactivate the communication circuitry 110 in remaining connection intervals except the m number among the connection intervals 1103, 1105, and 1107 determined to be deactivated.

For example, the electronic device 101 may activate the communication circuitry 110 in more (e.g., more than the m number) connection intervals than connection intervals 1109, 1111, 1113, and 1115, which are more adjacent to the connection timeout point 1140 than connection intervals 1103, 1105, and 1107. For example, the electronic device 101 may activate the communication circuitry 110 in more connection intervals than connection intervals 1117, 1119, 1121, and 1123, which are more adjacent to the connection timeout point 1140 than the connection intervals 1109, 1111, 1113, and 1115. For example, the electronic device 101 may activate the communication circuitry 110 in more connection intervals than connection intervals 1125, 1127, 1129, and 1131, which are more adjacent to the connection timeout point 1140 than the connection intervals 1117, 1119, 1121, and 1123.

For example, in case of not receiving a packet from the electronic device 101 in the connection interval 1131, the external electronic device 102 may determine the communication link 150 being released. Accordingly, the external electronic device 102 may not transmit a packet to the electronic device 101 in a connection interval 1133.

As described above, the electronic device 101 may determine a connection interval to activate the communication circuitry 110 among connection intervals in consideration of the connection timeout point 1140. In addition, the electronic device 101 may activate the communication circuitry 110 in more connection intervals as getting closer to the connection timeout point 1140. Accordingly, the electronic device 101 may gradually expand an opportunity to transmit a packet of the electronic device 101 to the external electronic device 102 before a connection timeout.

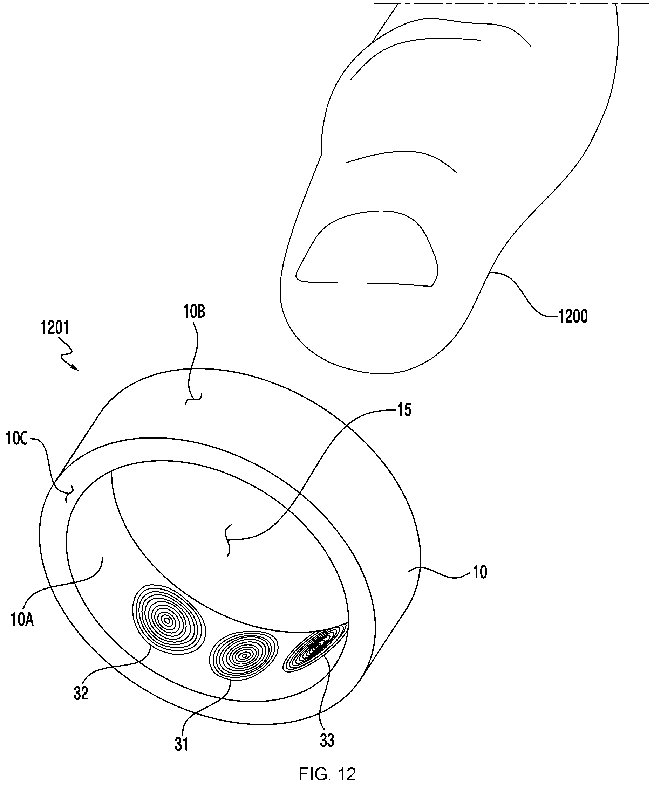

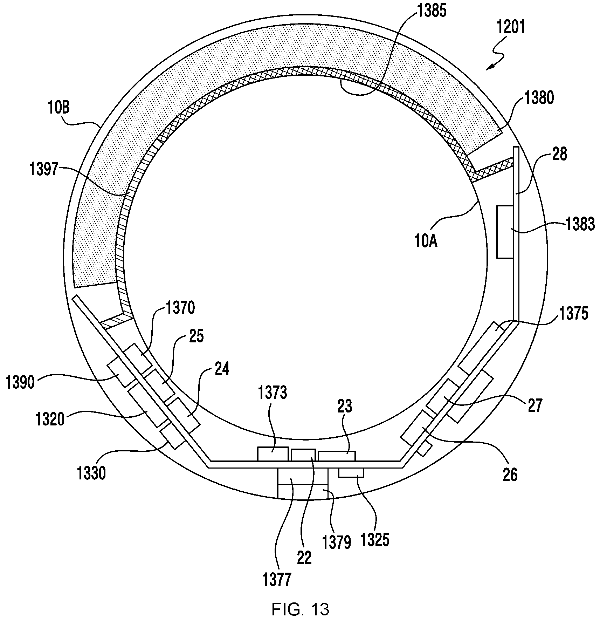

FIG. 12 is a diagram illustrating an example wearable device according to various embodiments. FIG. 13 is a cross sectional view of an example wearable device according to various embodiments.

Referring to FIG. 12 and FIG. 13, according to an embodiment, a wearable device 1201 (e.g., the electronic device 101 of FIG. 1 and an electronic device 1402 of FIG. 14) may be configured to be worn by a user. For example, the wearable device 1201 may have a ring shape in which a hole 15 is provided such that the user may insert a body (or a part of the body) 1200 (e.g., a finger). However, the disclosure is not limited thereto, and the wearable device 1201 may have various shapes corresponding to the body in order to be worn on the body of the user.

In an embodiment, the wearable device 1201 may include a housing 10.

Referring to FIG. 1, the housing 10 may form an exterior of the wearable device 1201. For example, the housing 10 may form or define a first surface 10A, a second surface 10B, and a third surface 10C. When the user wears the wearable device 1201, the first surface 10A may surround the body of the user to face a body 1200 of the user. The first surface 10A may at least partially contact the body 1200 of the user. For example, a first region 31, a second region 32, and a third region 33 formed in the first surface 10A may be in contact with the body 1200 of the user. The first region 31, the second region 32, and the third region 33 may be spaced apart from each other. The first region 31 may be positioned between the second region 32 and the third region 33. The second surface 10B may be spaced apart from the first surface 10A, and may face an opposite direction to the first surface 10A. The third surface 10C may surround a space between the first surface 10A and the second surface 10B. For example, the third surface 10C may extend from an edge of the first surface 10A to an edge of the second surface 10B. The hole 15 defined by the first surface 10A may be formed in the housing 10 to accommodate the body 1200 of the user. The first surface 10A may be referred to as an inner circumferential surface, and the second surface 10B may be referred to as an outer circumferential surface.

In an embodiment, at least a portion of the first surface 10A of the housing 10 may be formed by an insulating member. For example, the insulating member may form at least the first region 31, the second region 32, and the third region 33 of the first surface 10A. For example, the insulating member may form the first region 31, the second region 32, and the third region 33, and may also form a portion of the first surface 10A extending from the first region 31, the second region 32, and the third region 33. The first to third regions 31, 32, and 33 may be referred to as first to third sensing regions, first to third pattern regions, first to third Fresnel pattern regions, or first to third condensing regions, respectively.

In an embodiment, the second surface 10B and the third surface 10C of the housing 10 may be formed by a frame, but is not limited thereto. For example, the second surface 10B and/or the third surface 10C may be formed by the frame and the insulating member together.

In an embodiment, the frame of the housing 10 may be formed of metal and/or plastic. The frame and the insulating member may be coupled to each other. For example, the insulating member and the frame may be combined through a process such as insert injection. For example, an insulating member coupled to the frame may be formed by injecting a molten resin into a mold in which the frame is disposed, but is not limited thereto. The insulating member may include, for example, a resin such as epoxy, but is not limited thereto.

Referring to FIG. 13, the wearable device 1201 may include at least one light emitting unit (e.g., including light emitting circuitry) 22, 24 and 26 and at least one light receiving unit (e.g., including light receiving circuitry) 23, 25, and 27. In an embodiment, the wearable device 1201 may include a substrate 28. In an embodiment, the wearable device 1201 may include a processor (e.g., including processing circuitry) 1320, a controller (e.g., including circuitry) 1325, memory 1330, a temperature sensor 1370, a motion sensor 1373, a pressure sensor 1375, an external temperature sensor 1377, a lens 1379, a battery 1380, a power management module (e.g., including power management circuitry) 1383, a charging interface (e.g., including charging circuitry) 1385, communication circuitry 1390, and an antenna 1397.

In an embodiment, the substrate 28 may include a flexible printed circuitry board or a rigid-flexible printed circuitry board. In an embodiment, the substrate 28 may be at least partially bent. For example, the substrate 28 may include a bent portion to correspond to curvature of the first surface 10A having the ring shape.

In an embodiment, the communication circuitry 1390 may correspond to the communication circuitry 110 of FIG. 1. In an embodiment, the processor 1320 may correspond to the processor 120 of FIG. 1. In an embodiment, the memory 1330 may correspond to the memory 130 of FIG. 1. In an embodiment, the battery 1380 may correspond to the battery 140 of FIG. 1.

In an embodiment, the at least one light emitting unit 22, 24, and 26 and the at least one light receiving unit 23, 25, and 27 may also be referred to as a photoplethysmography (PPG) sensor. However, the disclosure is not limited thereto. In an embodiment, the at least one light emitting unit 22, 24, and 26 and the at least one light receiving unit 23, 25, and 27 may also be referred to as a proximity sensor.

In an embodiment, the at least one light emitting unit 22, 24, and 26 and the at least one light receiving unit 23, 25, and 27 may be disposed on the substrate 28. For example, the at least one light emitting unit 22, 24, and 26 may be disposed on the substrate 28 to face the first surface 10A. For example, the at least one light receiving unit 23, 25, and 27 may be disposed on the substrate 28 to face the first surface 10A.

In an embodiment, the light emitting unit 22 and the light receiving unit 23 may face the first region 31 of the insulating member. The light emitting unit 22 and the light receiving unit 23 may be aligned to the first region 31 of the insulating member. The light emitting unit 22 and the light receiving unit 23 may overlap the first region 31. In an embodiment, the light emitting unit 24 and the light receiving unit 25 may face the second region 32 of the insulating member. The light emitting unit 24 and the light receiving unit 25 may be aligned to the second region 32 of the insulating member. The light emitting unit 24 and the light receiving unit 25 may overlap the second region 32. In an embodiment, the light emitting unit 26 and the light receiving unit 27 may face the third region 33 of the insulating member. The light emitting unit 26 and the light receiving unit 27 may be aligned to the third region 33 of the insulating member. The light emitting unit 26 and the light receiving unit 27 may overlap the third region 33.

In an embodiment, the at least one light emitting unit 22, 24, and 26 may be configured to emit light toward the body 1200 of the user. In an embodiment, the at least one light emitting unit 22, 24, and 26 may be configured to emit light toward the body 1200 of the user under control of the controller 1325. The light emitted from the at least one light emitting unit 22, 24, and 26 may be transmitted to the body 1200 of the user, by passing through the insulating member. For example, the light emitted from the light emitting unit 22 may be transmitted to the body 1200 of the user through the first region 31. For example, the light emitted from the light emitting unit 24 may be transmitted to the body 1200 of the user through the second region 32. For example, the light emitted from the light emitting unit 26 may be transmitted to the body 1200 of the user through the third region 33. The light from the at least one light emitting unit 22, 24, and 26 may be reflected from the body 1200 of the user. The light reflected by the body 1200 of the user may reach the at least one light receiving unit 23, 25, and 27, by passing through the insulating member. The light reflected by the body 1200 of the user may reach the at least one light receiving unit 23, 25, and 27 through the at least one region 31, 32, and 33. The at least one light receiving unit 23, 25, and 27 may receive light incident from the outside through the insulating member. In an embodiment, the at least one of receiving unit 23, 25, and 27 may be configured to receive light from the body 1200 of the user under the control of the controller 1325. However, the disclosure is not limited thereto. For example, the light from the at least one light emitting unit 22, 24, and 26 may penetrate (or pass through) the body 1200 of the user. Light penetrated (or passed through) the body 1200 of the user may reach the at least one light receiving unit 23, 25, and 27 through the at least one region 31, 32, and 33.

In an embodiment, the motion sensor 1373 may include an acceleration sensor and/or a gyro sensor. For example, the motion sensor 1373 may be a 3-axis sensor (e.g., the acceleration sensor). For example, the motion sensor 1373 may be a 6-axis sensor (e.g., the acceleration sensor and the gyro sensor).

In an embodiment, the pressure sensor 1375 may be disposed on the substrate 28 to face the first surface 10A. In an embodiment, the pressure sensor 1375 may measure a pressure value applied to at least a portion of the first surface 10A.

In an embodiment, the external temperature sensor 1377 may be disposed on the substrate 28 to face the second surface 10B. The external temperature sensor 1377 may measure a temperature of a temperature measurement object based on infrared rays emitted by the temperature measurement object. In an embodiment, the lens 1379 for penetrating infrared rays may be provided such that infrared rays emitted by the temperature measurement object may be received by the external temperature sensor 1377. The lens 1379 may be disposed to face the second surface 10B.

In an embodiment, the processor 1320 may include various processing circuitry (e.g., refer to processor 120 above) obtain biometric information of the user using a sensor module. The processor 1320 may detect the biometric information of the user based on light emitted from the at least one light emitting unit 22, 24, and 26 and light received from the at least one light receiving unit 23, 25, and 27. For example, the biometric information may include information on heart rate and/or saturation of percutaneous oxygen (SpO2), but is not limited thereto. For example, the biometric information may include information on arterial stiffness, blood pressure, or an arterial age. Herein, the heart rate may indicate the number of heartbeats per unit time. The saturation of percutaneous oxygen may indicate a ratio of an amount of hemoglobin coupled with oxygen in blood to a total amount of hemoglobin. The arterial stiffness may indicate a degree to which an artery is hardened. The blood pressure may indicate pressure applied to an arterial wall when blood sent from the heart flows through an artery. The arterial age, which is a physiological age indicating a degree of aging of an artery, may be related to the arterial stiffness. The biometric information may include information on stress, blood sugar, and/or irregular heart rhythm notification (IHRN).

FIG. 14 is a block diagram illustrating an example electronic device 1401 in a network environment 1400 according to various embodiments.

Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module (SIM) 1496, or an antenna module 1497. In various embodiments, at least one of the components (e.g., the connecting terminal 1478) may be omitted from the electronic device 1401, or one or more other components may be added in the electronic device 1401. In various embodiments, some of the components (e.g., the sensor module 1476, the camera module 1480, or the antenna module 1497) may be implemented as a single component (e.g., the display module 1460).

The processor 1420 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 1420 may execute, for example, software (e.g., a program 1440) to control at least one other component (e.g., a hardware or software component) of the electronic device 1401 coupled with the processor 1420, and may perform various data processing or computation. According to an embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, an HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element including a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In an embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

As described above, an electronic device according to an example embodiment may comprise: communication circuitry configured for Bluetooth low energy (BLE), at least one processor, comprising processing circuitry, memory comprising one or more storage media, and storing instructions. At least one processor, individually or collectively, may be configured to execute the instructions and to cause the electronic device to: receive, through the communication circuitry, a first packet in a first connection event from an external electronic device operating as a central device with respect to the electronic device operating as a peripheral device, wherein the first packet may include a sequence number (SN) field having a first value; in response to the first packet, transmit, in the first connection event to the external electronic device, a second packet including a next expected sequence number (NESN) field having a second value different from the first value of the sequence number (SN) field of the first packet; in a second connection event according to peripheral latency after receiving the first packet, receive a third packet transmitted from the external electronic device; identify a value included in the SN field of the third packet; based on the SN field of the third packet corresponding to the second value, receive a fourth packet transmitted from the external electronic device in a third connection event according to the peripheral latency; and based on the SN field of the third packet corresponding to the first value, receive a packet transmitted from the external electronic device, before the third connection event according to the peripheral latency.

Strength of a packet transmitted from the electronic device to the external electronic device in one or more connection events after the second connection event and before the third connection event may be set to be stronger than strength of the second packet.

At least one processor individually or collectively, may be configured to cause the electronic device to, based on the SN field of the third packet corresponding to the first value, receive the packet transmitted from the external electronic device, before the third connection event, based on the third packet being an empty protocol data unit (PDU).

Ay least one processor individually or collectively, may be configured to cause the electronic device to, based on the SN field of the third packet corresponding to the first value, set a value of a more data (MD) field of a packet transmitted to the external electronic device in the second connection event to 1.

At least one processor individually or collectively, may be configured to cause the electronic device to, based on the SN field of the third packet corresponding to the first value, set the value of the MD field of the packet transmitted to the external electronic device in one or more connection events between the second connection event and the third connection event to 1.

At least one processor individually or collectively, may be configured to cause the electronic device to set a value of an MD of a packet transmitted to the external electronic device to 1 in a connection event determined according to a specified period among connection events according to the peripheral latency.

At least one processor individually or collectively, may be configured to cause the electronic device to, based on the SN field of the third packet corresponding to the first value, receive a packet transmitted from the external electronic device, in a specified number of consecutive connection events. The specified number may be increased as the second connection event approach a connection timeout.

At least one processor individually or collectively, may be configured to cause the electronic device to, based on the SN field of the packet transmitted from the external electronic device before the third connection event corresponding to the second value, refrain from receiving a packet transmitted from the external electronic device, in one or more connection events before subsequent connection event according to the peripheral latency based on the connection event where the packet is transmitted.

At least one processor individually or collectively, may be configured to: cause the electronic device to transmit, in a connection event to the external electronic device through the communication circuitry, a packet for requesting use of the peripheral latency; and in response to approval of the request of the external electronic device, receive a packet in a connection event according to the peripheral latency.

At least one processor individually or collectively, may be configured to: cause the electronic device to, based on the SN field of the third packet corresponding to the second value, in one or more connection events after the second connection event and before the third connection event, deactivate the communication ; and based on the SN field of the third packet corresponding to the first value, in at least one connection event among the one or more connection events, activate the communication circuitry to receive the packet transmitted from the external electronic device.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a first packet in a first connection event from an external electronic device operating as a central device with respect to the electronic device operating as a peripheral device, wherein the first packet may include a link layer identification (LL ID) field; identify a value of the LL ID field included in the packet obtained in the first connection event; based on the value of the LL ID field satisfying a first condition, receive a second packet transmitted from the external electronic device in a second connection event according to peripheral latency; and based on the value of the LL ID field satisfying a second condition, receive a packet transmitted from the external electronic device, before a third connection event according to the peripheral latency.

At least one processor individually or collectively, may be configured to cause the electronic device to: based on the LL ID being 0b00, determine that the value of the LL ID field satisfies the second condition; based on the LL ID being 0b01 and there being no fragmented data in the first packet, determine that the value of the LL ID field satisfies the second condition; based on the LL ID being 0b10 and there being no payload in the first packet, determine that the value of the LL ID field satisfies the second condition; and based on the LL ID being 0b11 and there being no control opcode or a control parameter in the first packet, determine that the value of the LL ID field satisfies the second condition.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a first packet in a first connection event from an external electronic device operating as a central device with respect to the electronic device operating as a peripheral device, wherein the first packet may include a next expected sequence number (NESN) field having a first value; in response to the first packet, transmit, in the first connection event to the external electronic device, a second packet including a sequence number (SN) field having a first value equal to the first value of the NESN field of the first packet; in a second connection event according to peripheral latency after receiving the first packet, receive a third packet transmitted from the external electronic device; identify a value included in the NESN field of the third packet; based on the NESN field of the third packet corresponding to a second value different from the first value, receive a fourth packet transmitted from the external electronic device in a third connection event according to the peripheral latency; and based on the NESN field of the third packet corresponding to the first value, receive a packet transmitted from the external electronic device, before the third connection event according to the peripheral latency.

As described above, a method according to an example embodiment may be executed by an electronic device including communication circuitry configured for Bluetooth low energy (BLE). The method may comprise: receiving, through the communication circuitry, a first packet in a first connection event from an external electronic device operating as a central device with respect to the electronic device operating as a peripheral device, wherein the first packet may include a sequence number (SN) field having a first value; in response to the first packet, transmitting, in the first connection event to the external electronic device, a second packet including a next expected sequence number (NESN) field having a second value different from the first value of the sequence number (SN) field of the first packet; in a second connection event according to peripheral latency after receiving the first packet, receiving a third packet transmitted from the external electronic device; identifying a value included in the SN field of the third packet; based on the SN field of the third packet corresponding to the second value, receiving a fourth packet transmitted from the external electronic device in a third connection event according to the peripheral latency; and based on the SN field of the third packet corresponding to the first value, receiving a packet transmitted from the external electronic device, before the third connection event according to the peripheral latency.

The method may comprise, based on the SN field of the third packet corresponding to the first value, receiving the packet transmitted from the external electronic device, before the third connection event, based on the third packet being an empty protocol data unit (PDU).

The method may comprise, based on the SN field of the third packet corresponding to the first value, setting a value of a more data (MD) field of a packet transmitted to the external electronic device in the second connection event to 1.

As described above, a non-transitory computer-readable storage medium may comprise one or more programs including instructions. The instructions, when executed by at least one processor of an electronic device including communication circuitry configured for Bluetooth low energy (BLE) individually or collectively, may cause the electronic device to: receive, through the communication circuitry, a first packet in a first connection event from an external electronic device operating as a central device with respect to the electronic device operating as a peripheral device, wherein the first packet may include a sequence number (SN) field having a first value; in response to the first packet, transmit, in the first connection event to the external electronic device, a second packet including a next expected sequence number (NESN) field having a second value different from the first value of the sequence number (SN) field of the first packet; in a second connection event according to peripheral latency after receiving the first packet, receive a third packet transmitted from the external electronic device; identify a value included in the SN field of the third packet; based on the SN field of the third packet corresponding to the second value, receive a fourth packet transmitted from the external electronic device in a third connection event according to the peripheral latency; and based on the SN field of the third packet corresponding to the first value, receive a packet transmitted from the external electronic device, before the third connection event according to the peripheral latency.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a first packet in a first connection event from an external electronic device operating as a central device with respect to the electronic device operating as a peripheral device; in response to the first packet, transmit, in the first connection event to the external electronic device, a second packet including a next expected sequence number (NESN) field having a second value different from a first value of a sequence number (SN) field of the first packet; after receiving the first packet according to peripheral latency, identify a second connection event for receiving a third packet to be transmitted from the external electronic device; and before a third connection event for receiving a fourth packet to be transmitted from the external electronic device according to the peripheral latency after receiving the third packet, activate the communication circuitry to receive a packet transmitted from the external electronic device, based on receiving the third packet including an SN having the first value in the second connection event from the external electronic device.

Strength of a packet transmitted from the electronic device to the external electronic device in one or more connection events after the second connection event and before the third connection event may be set to be stronger than strength of a packet transmitted from the electronic device to the external electronic device in the first connection event.

At least one processor individually or collectively, may be configured to cause the electronic device to activate the communication circuitry in one or more connection events before the third connection event, based on the third packet transmitted from the external electronic device to the electronic device is an empty protocol data unit (PDU).

At least one processor individually or collectively, may be configured to cause the electronic device to set a value of more data (MD) of at least one of packets transmitted to the external electronic device to 1 in a connection event identified according to the peripheral latency.

At least one processor individually or collectively, may be configured to cause the electronic device to set the value of the MD of the packet transmitted to the external electronic device to 1 in one or more connection events between the second connection event and the third connection event.

At least one processor individually or collectively, may be configured to cause the electronic device to set the value of the MD of the packet transmitted to the external electronic device in a connection event determined according to a specified period among the first connection event, the second connection event, or the third connection event to 1.

At least one processor individually or collectively, may be configured to cause the electronic device to activate the communication circuitry such that a rate of activating the communication circuitry in connection events other than the first connection event, the second connection event, and the third connection event according to peripheral latency increases by approaching a connection timeout.

The electronic device may be a wearable device worn by a user.

The electronic device may be a wearable device worn on a finger of the user.

The electronic device may include a rechargeable battery. Activating the communication circuitry may include providing power of the battery to the communication circuitry.

Activating the communication circuitry may include turning on the communication circuitry.

At least one processor individually or collectively, may be configured to cause the electronic device to, during one or more connection events after the second connection event and before the third connection event, based on receiving a packet from the external electronic device, transmit a response to the packet to the external electronic device.

At least one processor individually or collectively, may be configured to cause the electronic device to: during one connection event among one or more connection events before the third connection event, based on a value of an SN of a packet from the external electronic device being equal to a value of the NESN, deactivate the communication circuitry in one or more connection events following the one connection event for receiving another packet from the external electronic device according to the peripheral latency based on the one connection event.

At least one processor individually or collectively, may be configured to cause the electronic device to: through the communication circuitry, transmit a packet requesting use of the peripheral latency to the external electronic device in a connection event; and in response to approval of the external electronic device for the request, activate the communication circuitry to receive a packet in a connection event identified according to the peripheral latency, and to deactivate the communication circuitry in another connection event other than the connection event identified according to the peripheral latency.

At least one processor individually or collectively, may be configured to cause the electronic device to, during one or more connection events between an end point of the second connection event and a start point of the third connection event, deactivate the communication circuitry, based on a value of an SN of the third packet being the same as a value of an NESN of the second packet.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a packet in a first connection event from an external electronic device operating as a central device with respect to the electronic device operating as a peripheral device; and based on a value of a link layer (LL) identification (ID) included in the packet obtained in the first connection event, determine whether to activate the communication circuitry in one or more connection events to be deactivated according to peripheral latency between a second connection event and a third connection event according to peripheral latency.

At least one processor individually or collectively, may be configured to cause the electronic device to: based on the LL ID being 0b00, determine to activate the communication circuitry in one or more connection events; based on the LL ID being 0b01 and there being no fragmented data, determine to activate the communication circuitry in one or more connection events; based on the LL ID being 0b10 and there being no payload in the packet, determine to activate the communication circuitry in one or more connection events; and based on the LL ID being 0b11 and there being no control opcode or a control parameter in the packet, determine to activate the communication circuitry in one or more connection events.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a first packet in a first connection event from an external electronic device operating as a central device with respect to the electronic device operating as a peripheral device; in response to the first packet, transmit, to the external electronic device, a second packet including a sequence number (SN) having a first value equal to a first value of a next expected sequence number (NESN) of the first packet, in the first connection event; after transmitting the first packet according to peripheral latency, identify a second connection event for receiving a third packet to be transmitted from the external electronic device; and before a third connection event for receiving a fourth packet to be transmitted from the external electronic device according to the peripheral latency after transmitting the third packet, activate the communication circuitry to receive a packet transmitted from the external electronic device, based on receiving the third packet including an NESN having the first value in the second connection event from the external electronic device.

As described above, according to an example embodiment, a method may be executed by an electronic device including communication circuitry configured for Bluetooth low energy (BLE). The method may comprise: receiving, through the communication circuitry, a first packet in a first connection event from an external electronic device operating as a central device with respect to the electronic device operating as a peripheral device; in response to the first packet, transmitting, in the first connection event to the external electronic device, a second packet including a next expected sequence number (NESN) having a second value different from a first value of a sequence number (SN) of the first packet; after transmitting the first packet according to peripheral latency, identifying a second connection event for receiving a third packet to be transmitted from the external electronic device; and before a third connection event for receiving a fourth packet to be transmitted from the external electronic device according to the peripheral latency after transmitting the third packet, activating the communication circuitry to receive a packet transmitted from the external electronic device, based on receiving the third packet including the SN having the first value in the second connection event from the external electronic device.

In an example embodiment, strength of a packet transmitted from the electronic device to the external electronic device in one or more connection events after the second connection event and before the third connection event may be set to be stronger than strength of a packet transmitted from the electronic device to the external electronic device in the first connection event.

As described above, the method may comprise activating the communication circuitry in one or more connection events before the third connection event, based on the third packet transmitted from the external electronic device to the electronic device is an empty protocol data unit (PDU).

As described above, the method may comprise setting a value of more data (MD) of at least one of packets transmitted to the external electronic device to 1 in a connection event identified according to the peripheral latency.

As described above, a non-transitory computer-readable storage medium may comprise one or more programs including instructions. The instructions, when executed by at least one processor of an electronic device including communication circuitry configured for Bluetooth low energy (BLE) individually or collectively, may cause the electronic device to: receive, through the communication circuitry, a first packet in a first connection event from an external electronic device operating as a central device with respect to the electronic device operating as a peripheral device; in response to the first packet, transmit, in the first connection event to the external electronic device, a second packet including a next expected sequence number (NESN) having a second value different from a first value of a sequence number (SN) of the first packet; after transmitting the first packet according to peripheral latency, identify a second connection event for receiving a third packet to be transmitted from the external electronic device; and before a third connection event for receiving a fourth packet to be transmitted from the external electronic device according to the peripheral latency after transmitting the third packet, activate the communication circuitry to receive a packet transmitted from the external electronic device, based on receiving the third packet including the SN having the first value in the second connection event from the external electronic device.

As described above, an electronic device according to an example embodiment may comprise: communication circuitry configured for Bluetooth low energy (BLE), at least one processor comprising processing circuitry, memory comprising one or more storage mediums, and storing instructions. At least one processor individually or collectively, may be configured to execute the instructions and to cause the electronic device to: receive, through the communication circuitry, a third packet including a sequence number (SN) in a first connection event according to peripheral latency from an external electronic device operating as a central device with respect to the electronic device operating as a peripheral device; based on identifying that a value of an SN included in the first packet is different from a value of a next expected sequence number (NESN) included in a second packet transmitted from the external electronic device in a second connection event before the first connection event, activate the communication circuitry in one or more connection events between the first connection event and a third connection event; and based on identifying that the value of the SN is equal to the value of the NESN, deactivate the communication circuitry in the one or more connection events. The second connection event may be a connection event before the first connection event identified according to the peripheral latency. The third connection event may be a connection event after the first connection event identified according to the peripheral latency.

At least one processor individually or collectively, may be configured to cause the electronic device to: control, through the communication circuitry, the communication circuitry to transmit the second packet in the first connection event to the external electronic device operating as the central device with respect to the electronic device operating as the peripheral device; deactivate the communication circuitry in one or more connection events following the first connection event, according to the peripheral latency; identify the second connection event following the one or more connection events as a connection event for receiving a packet following the first packet from the external electronic device according to the peripheral latency; activate the communication circuitry to receive the third packet transmitted from the electronic device in the second connection event, based on the identification; and based on identifying that the sequence number (SN) in the third packet received from the electronic device through the activated communication circuitry is different from the next expected sequence number (NESN) in the second packet, activate the communication circuitry in one or more other connection events following the second connection event to receive a packet including the same SN as the NESN according to the peripheral latency. The one or more other connection events may be one or more connection events before the third connection event and after the second connection event for receiving a packet transmitted from the electronic device according to the peripheral latency.

At least one processor individually or collectively, may be configured to cause the electronic device to: transmit, through the communication circuitry, the second packet in the first connection event to the external electronic device operating as the central device with respect to the electronic device operating as the peripheral device; during one or more connection events before the second connection event according to the peripheral latency following the first connection event, deactivate the communication circuitry; activate the communication circuitry to receive the third packet from the external electronic device in the second connection event; and based on a value of a sequence number (SN) of the third packet being different from a value of a next expected sequence number (NESN) of the second packet, control the communication circuitry to receive a fourth packet from the external electronic device in one or more connection events between an end point of the second connection event and a start point of the third connection event. The third connection event may be a connection event according to the peripheral latency following the second connection event.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), the element may be coupled with the other element directly (e.g., wiredly), wirelessly, or via a third element.

As used in connection with various embodiments of the disclosure, the term "module" may include a unit implemented in hardware, software, firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (101), comprising:
communication circuitry (110) configured for Bluetooth low energy (BLE),
at least one processor (120) comprising processing circuitry; and
memory (130) comprising one or more storage mediums storing instructions, and
wherein the instructions, when executed by the at least one processor individually or collectively, cause the electronic device to:
receive, through the communication circuitry, a first packet (801) in a first connection event from an external electronic device (102) operating as a central device with respect to the electronic device operating as a peripheral device, the first packet including a sequence number (SN) field having a first value,
in response to the first packet, transmit, in the first connection event to the external electronic device, a second packet (805) including a next expected sequence number (NESN) field having a second value different from the first value of the sequence number (SN) field of the first packet,
in a second connection event according to peripheral latency after receiving the first packet, receive a third packet (821) transmitted from the external electronic device,
identify a value included in the SN field of the third packet,
based on the SN field of the third packet corresponding to the second value, receive a fourth packet transmitted from the external electronic device in a third connection event according to the peripheral latency, and
based on the SN field of the third packet corresponding to the first value, receive a packet transmitted from the external electronic device, before the third connection event according to the peripheral latency.

2. The electronic device of claim 1,
wherein a strength of a packet transmitted from the electronic device to the external electronic device in one or more connection events after the second connection event and before the third connection event is set to be greater than strength of the second packet.

3. The electronic device of claim 1,
wherein the instructions, when executed by at least one processor individually or collectively, cause the electronic device to:
based on the SN field of the third packet corresponding to the first value, receive the packet transmitted from the external electronic device, before the third connection event, based on the third packet being an empty protocol data unit (PDU).

4. The electronic device of claim 1,
wherein the instructions, when executed by at least one processor individually or collectively, cause the electronic device to:
based on the SN field of the third packet corresponding to the first value, set a value of a more data (MD) field of a packet transmitted to the external electronic device in the second connection event to 1.

5. The electronic device of claim 4,
wherein the instructions, when executed by at least one processor individually or collectively, cause the electronic device to:
based on the SN field of the third packet corresponding to the first value, set the value of the MD field of the packet transmitted to the external electronic device in one or more connection events between the second connection event and the third connection event to 1.

6. The electronic device of claim 1,
wherein the instructions, when executed by at least one processor individually or collectively, cause the electronic device to:
set a value of an more data (MD) field of a packet transmitted to the external electronic device to 1 in a connection event determined according to a specified period among connection events according to the peripheral latency.

7. The electronic device of claim 1,
wherein the instructions, when executed by at least one processor individually or collectively, cause the electronic device to:
based on the SN field of the third packet corresponding to the first value, receive a packet transmitted from the external electronic device, in a specified number of consecutive connection events, the specified number being increased as the second connection events approach a connection timeout.

8. The electronic device of claim 1,
wherein the electronic device is a wearable device worn by a user.

9. The electronic device of claim 1,
wherein the instructions, when executed by at least one processor individually or collectively, cause the electronic device to:
during one or more connection events after the second connection event and before the third connection event, based on receiving a packet (831) from the external electronic device, transmit a response (835) to the packet to the external electronic device.

10. The electronic device of claim 1,
wherein the instructions, when executed by at least one processor individually or collectively, cause the electronic device to:
based on the SN field of the packet transmitted from the external electronic device before the third connection event corresponding to the second value,
refrain from receiving a packet transmitted from the external electronic device, in one or more connection events before subsequent connection event according to the peripheral latency based on the connection event where the packet is transmitted.

11. The electronic device of claim 1,
wherein the instructions, when executed by at least one processor individually or collectively, cause the electronic device to:
transmit, in a connection event to the external electronic device through the communication circuitry, a packet for requesting use of the peripheral latency,
in response to approval of the request of the external electronic device, receive packets in a connection event according to the peripheral latency.

12. The electronic device of claim 1,
wherein the instructions, when executed by at least one processor individually or collectively, cause the electronic device to:
based on the SN field of the third packet corresponding to the second value, in one or more connection events after the second connection event and before the third connection event, deactivate the communication circuitry, and
based on the SN field of the third packet corresponding to the first value, in at least one connection event among the one or more connection events, activate the communication circuitry to receive the packet transmitted from the external electronic device.

13. An electronic device (101), comprising:
communication circuitry (110) configured for Bluetooth low energy (BLE),
at least one processor (120) comprising processing circuitry; and
memory (130) comprising one or more storage mediums, and storing instructions, and
wherein the instructions, when executed by the at least one processor individually or collectively, cause the electronic device to:
receive, through the communication circuitry, a first packet (801) in a first connection event from an external electronic device operating as a central device with respect to the electronic device operating as a peripheral device, the first packet including a link layer identification (LL ID) field,
identify a value of the LL ID field included in the packet obtained in the first connection event,
based on the value of the LL ID field satisfying a first condition, receive a second packet transmitted from the external electronic device in a second connection event according to peripheral latency, and
based on the value of the LL ID field satisfying a second condition, receive a packet transmitted from the external electronic device, before a third connection event according to the peripheral latency.

14. The electronic device of claim 13,
wherein the instructions, when executed by at least one processor individually or collectively, cause the electronic device to:
based on the LL ID being 0b00, determine that the value of the LL ID field satisfies the second condition,
based on the LL ID being 0b01 and there being no fragmented data in the first packet, determine that the value of the LL ID field satisfies the second condition,
based on the LL ID being 0b10 and there being no payload in the first packet, determine that the value of the LL ID field satisfies the second condition, or
based on the LL ID being 0b11 and there being no control opcode or a control parameter in the first packet, determine that the value of the LL ID field satisfies the second condition.

15. An electronic device (101), comprising:
communication circuitry (110) configured for Bluetooth low energy (BLE),
at least one processor (120) comprising processing circuitry; and
memory (130) comprising one or more storage mediums, and storing instructions, and
wherein the instructions, when executed by the at least one processor individually or collectively, cause the electronic device to:
receive, through the communication circuitry, a first packet (801) in a first connection event from an external electronic device (102) operating as a central device with respect to the electronic device operating as a peripheral device, the first packet including a next expected sequence number (NESN) field having a first value,
in response to the first packet, transmit, in the first connection event to the external electronic device, a second packet (805) including a sequence number (SN) field having a first value equal to the first value of the NESN field of the first packet,
in a second connection event according to peripheral latency after receiving the first packet, receive a third packet (821transmitted from the external electronic device,
identify a value included in the NESN field of the third packet,
based on the NESN field of the third packet corresponding to a second value different from the first value, receive a fourth packet transmitted from the external electronic device in a third connection event according to the peripheral latency, and
based on the NESN field of the third packet corresponding to the first value, receive a packet transmitted from the external electronic device, before the third connection event according to the peripheral latency.
